# EUROPEAN PATENT SPECIFICATION

(11) **EP 1 503 177 B1**
(45) Date of publication and mention of the grant of the patent: **13.04.2016**
(21) Application number: 04017470.8
(22) Date of filing: 23.07.2004
(51) Int. Cl.: G01C 19/56

(54) **Piezoelectric vibrating element, supporting structure therefor, piezoelectric vibrator and piezoelectric vibrating gyroscope**
Piezoelektrisches Schwingelement, Struktur zu seiner Halterung, piezoelektrischer Schwinger und piezoelektrischer Schwingkreisel
Elément vibrant piézo-électrique, structure de support, vibreur piézo-électrique et gyroscope vibrant piézo-électrique

(30) Priority: 25.07.2003 JP 2003201892; 19.04.2004 JP 2004122906
(43) Date of publication of application: 02.02.2005
(73) Proprietor: Seiko Epson Corporation, Shinjuku-ku Tokyo 163-0811 (JP)
(72) Inventor: Karaki, Eiji, Suwa-shi, Nagano-ken 392-8502 (JP); Kawauchi, Osamu, Suwa-shi, Nagano-ken 392-8502 (JP)
(74) Representative: MERH-IP Matias Erny Reichl Hoffmann Patentanwälte PartG mbB

(56) References cited:
- EP-A- 0 638 783
- EP-A- 0 664 438
- EP-A- 0 930 482
- EP-A2- 1 498 693
- DE-A1- 19 500 800
- US-A1- 2003 084 723
- PATENT ABSTRACTS OF JAPAN vol. 1998, no. 11, 30 September 1998 (1998-09-30) -& JP 10 170272 A (SEIKO EPSON CORP), 26 June 1998 (1998-06-26)

## Description

The present invention relates to a piezoelectric vibrating element, a supporting structure for the piezoelectric vibrating element, a piezoelectric vibrator, and a piezoelectric vibrating gyroscope.

Piezoelectric vibrating gyroscopes that use piezoelectric vibrating elements or piezoelectric vibrators having the piezoelectric vibrating elements housed in containers have been conventionally used as angular velocity sensors for detecting angular velocities in rotational systems. The piezoelectric vibrating gyroscopes are used for car navigation systems, for detecting camera vibration of VTRs and still cameras, etc..

For the piezoelectric vibrating gyroscopes, there are used piezoelectric vibrating elements composed of vibrating arms extending in a single plane and base sections for connecting the vibrating arms. The piezoelectric vibrating gyroscopes drive the piezoelectric vibrating elements to vibrate using drive circuits (this vibration is hereinafter referred to as "excited vibration") and detect a sensing vibration caused in accordance with angular velocities using detection circuits to output electric signals. The excited vibration is generated in all or some of a plurality of vibrating arms. When an angular velocity is applied to the piezoelectric vibrating element, the Coriolis force in a direction perpendicular to the direction of the excited vibration operates on the vibrating arms excitedly vibrating to cause a sensing vibration in all or some of the plurality of vibrating arms.

As a piezoelectric vibrating element composed of a plurality of vibrating arms and a base section connecting the vibrating arms, for example, a piezoelectric vibrating element is known that comprises a pair of excited vibration systems extending from the periphery of the base section in directions opposing to each other and a pair of sensing vibration systems extending in directions perpendicular to the extension directions of the excited vibration systems. The excited vibration system has a connecting section connected to the periphery of the base section and an excited vibration arm extending from the connecting section in a traverse direction with respect to the connecting section.

As a conventional supporting structure for the piezoelectric vibrating element, a structure is adopted in which, with the piezoelectric vibrating element opposite to a supporting stage, a portion of the base section of the piezoelectric vibrating element having the smallest vibration amplitude is fixed to a supporting member on the supporting stage. The structure is known in which electrodes of the piezoelectric vibration element are connected to a drive circuit and a detection circuit provided on the supporting stage via metal wires (see JP 2001-12955 A for example).

However, according to the supporting structure of JP 2001-12955 A, since there is only one supporting point, the piezoelectric vibrating element is easy to be tilted when a vibration or an impact is applied from the outside. As a result, a problem arises that the piezoelectric vibrating element abuts on the supporting stage to make it difficult to keep a stable excited vibration and a stable sensing vibration.

Moreover, another problem arises in that the excited vibration and the sensing vibration are easy to be suppressed by supporting the piezoelectric vibrating element.

Documents EP 0 930 482 A and US 2003 084723 A each disclose a piezoelectric vibrating element, wherein vibration arms extend outward from a base section. Additionally, first beams are provided which extend from the base section to supporting sections provided at their tip portions.

Document JP 10 170272 A discloses a piezoelectric vibrating element wherein four vibration arms extend from a base section in a single plane. Between these vibration arms, two straight support beams are provided which extend outwards from the base section and in parallel with their respective neighbouring vibration arms.

Document EP 0 638 783 A discloses a piezoelectric vibrating element wherein four vibration arms extend outwards from a base section in a single plane. The base section comprises a central mounting platform, which is joined to an outer frame of the base section via bridges. The vibrating element is affixed to a supporting structure at the central mounting platform.

Document EP 1498 693 discloses a piezoelectric vibrating element, wherein a plurality of vibration arms extend outwards from a base section. No supporting structure is shown.

An object of the present invention is to provide a piezoelectric vibrating element, a supporting structure for a piezoelectric vibrating element, a piezoelectric vibrator, and a piezoelectric vibrating gyroscope capable of keeping a stable excited vibration and a stable sensing vibration insensitive against vibrations or impacts from the outside.

Another object of the present invention is to provide a piezoelectric vibrating element, a supporting structure for a piezoelectric vibrating element, a piezoelectric vibrator, and a piezoelectric vibrating gyroscope in which the excited vibration and the sensing vibration are hardly influenced by their support.

These objects are achieved by a piezoelectric vibrating element as claimed in claim 1, a supporting structure therefor as claimed in claims 10 and 14 a piezoelectric vibrator as claimed in claim 16 and a piezoelectric vibrating gyroscope as claimed in claim 17. Preferred embodiments of the invention are subject-matter of the dependent claims.

In the piezoelectric vibrating element according to the present invention, since, for example, the first supporting sections are formed at the tips of the respective beams extending in four directions from the periphery of the base section of the piezoelectric vibrating element, the piezoelectric vibrating element is kept in a balanced and stable posture. Further, since the elastic beams are provided between the base section and the supporting sections, even if vibrations or impacts are applied from the outside, the vibrations or the impacts can be absorbed by the beams to maintain the excited vibrations and the sensing vibrations stable.

Further, it is advantageous that the excited vibrations and the sensing vibrations are hardly affected by thus supporting the piezoelectric vibrating element.

In the above structure, the first supporting section, and further, a second supporting section provided on the center of the base section are preferably formed.

The piezoelectric vibrating element thus structured is equipped with the second supporting section in the center portion of the base section. Therefore, since the periphery portion of the piezoelectric vibrating element is supported by the first supporting sections and the center portion thereof is supported by the second supporting section, the piezoelectric vibrating element can be more stably supported. Further, when a strong impact is applied from the outside, it is prevented by the second supporting section that the beams are deformed beyond elastic ranges to cause the piezoelectric vibrating element be broken.

Further, in the above structure, the first supporting section formed on the tip portion of the beams, a pair of openings symmetrically provided with respect to the center of the base section, a second beam having elasticity and formed between the openings, a second supporting section provided on the center of this beam, and the first beams are preferably formed.

According to the above structure, since the second supporting section also equipped with the elastic beam that absorbs vibrations in the periphery of the base section is provided on the base section in addition to the first sections described above, propagation of the vibrations to the second supporting section can be reduced, and accordingly, negative effects to the excited vibrations or the sensing vibrations derived from providing the second supporting section are also reduced.

Further, the structure of the piezoelectric vibrating element of the above preferably comprises an exciting electrode formed on a surface of the vibration arm for exciting the piezoelectric vibrating element to vibrate, and conduction electrodes formed on a surface of the first supporting section and a surface of the second supporting section, wherein the exciting electrode is preferably connected to the conduction electrode.

Here, the conduction electrodes denote electrodes for connecting the exciting electrodes with a semiconductor device or an external circuit described below.

Thus, the exciting signals for exciting the piezoelectric vibrating element to vibrate can be sent through the conduction electrodes formed on the surfaces of the first supporting sections and the surface of the second supporting section.

Further, the structure described above preferably comprises the exciting electrode formed on the surface of the vibration arm, and a sensing electrode formed on a different position from the exciting electrode for detecting a sensing vibration generated in the piezoelectric vibrating element in accordance with the excited vibration and an angular velocity applied from the outside, wherein the sensing electrode and the exciting electrode are preferably connected to different ones of the conduction electrodes.

According to this structure, in addition to the exciting signals, the signals of sensing vibrations can be picked up from the conduction electrodes provided to the first supporting sections or the second supporting section.

Further, it is characterized in that the first supporting section is continuously formed to a frame section formed around the vibration arms.

The piezoelectric vibrating element described above is manufactured, for example, from a wafer by photolithography. In this case, the piezoelectric vibrating element is formed with a situation where the periphery of the piezoelectric vibrating element is surrounded by the frame section. Since the piezoelectric vibrating element has the first supporting section integrated with this frame section, the structural strength of the supporting section increases to maintain more stable posture. Further, since the frame sections and the supporting sections are integrated, the piezoelectric vibrating element is easy to be handled when encapsulated in the container, as described below, to advantageously improve the operating efficiency.

Further, the frame section is preferably formed so as to provide constant gaps with the base section, the vibration arms, and the beams.

According to this, since substantially constant circumferential gaps of the piezoelectric vibrating element with the surrounding frame section are provided, the resist film can be formed in a constant thickness in the resist deposition process of the photolithography process for shaping the piezoelectric vibrating element by etching. Thus, the shape of each section of the piezoelectric vibrating element can stably be formed, and, as a result, the excited vibrations and the sensing vibrations can be more stable.

Further, a part of the beam is preferably shaped to have smaller stiffness than the rest.

In this case, as a shape having a smaller stiffness than the rest, the structure in which a part of the beam in between the base section and the supporting sections is thinner than the rest can be adopted.

According to the above, vibrations or impacts caused by the circumferential condition become hard to be propagated from the supporting sections to the base section via the beams, thus the effects of vibrations or the impacts become hard to be applied to the vibration arms, and therefore, the excited vibrations and the sensing vibrations advantageously become hard to be suppressed by supporting the piezoelectric element. Note that this effect can be enhanced by disposing the low stiffness portion adjacent to the base section.

Furthermore, in the piezoelectric vibrating element, the exciting electrode and the sensing electrode formed on the vibration arms are preferably connected to the conduction electrodes formed on the frame section.

Note that, hereinafter, the exciting electrode can be referred to as a exciting signal electrode, and the sensing electrode can be referred to as a sensing signal electrode.

As described above, the supporting sections and the frame section are integrally formed. Therefore, since the exciting electrode and the sensing electrode provided on the vibration arms are connected to the conduction electrode provided on the frame section, the electrode forming process can be simplified and the work efficiency in encapsulating the piezoelectric vibrating element in a container described below can be enhanced.

Further, a supporting structure for a piezoelectric vibrating element according to the present invention comprises a piezoelectric vibrating element described above, a supporting stage for oppositely mounting the piezoelectric vibrating element, and fixing means provided between the first supporting sections and the supporting stage and between the second supporting section and the supporting stage for fixing the piezoelectric vibrating element.

In this case, as a supporting stage, a circuit board with a predetermined electrode pattern formed on a surface hereof can be adopted.

According to the present invention, since the piezoelectric vibrating element is fixed to the supporting stage by, for example, fixing means in five points of the first supporting sections and the second supporting section, the posture thereof can be kept stable even if vibrations or impacts are applied from the outside. Further, since the gaps with the supporting stage can stably be maintained, even if vibrations or impacts are applied from the outside, the piezoelectric vibrating element can be prevented from abutting on the supporting stage by appropriately setting the height (thickness) of the fixing means, thus enabling to keep the excited vibrations and the sensing vibrations stable.

Further, the fixing means are preferably made of a conductive material.

In this case, a conductive adhesive can be adopted as the fixing means.

Thus, by using the conductive adhesive, fixing of the piezoelectric vibrating element to the supporting stage and electrical connection of the exciting electrode or the sensing electrode formed on the piezoelectric vibrating element with, for example, the electrode patterns formed on the supporting stage via the conduction electrode are easily achieved.

Further, the fixing means described above are preferably made of an elastic material.

According to the present structure, since the fixing means having elasticity further absorbs vibrations and impacts from the outside to keep the excited vibrations and the sensing vibrations stable. Further, since the fixing means serves as a buffer member of vibrations leaking to the respective supporting sections, negative effects to the excited vibrations or the sensing vibrations derived from the fixing of the respective supporting sections can further be reduced.

Further, in the supporting structure described above, the fixing means provided between the second supporting section and the supporting stage is preferably thicker than the fixing means provided between the first supporting section and the supporting stage.

In the structure of the present invention, it is realized, for example, by forming a portion of the supporting stage for mounting the piezoelectric vibrating element on which the first supporting section is mounted higher than other portions. According to the present structure, the piezoelectric vibrating element is supported by the first supporting sections via a thin fixing means and has a thicker fixing means between the second supporting section and the supporting stage. The second supporting section is provided on the base section as described above. Accordingly, the fixing means of the second supporting section thicker than those of the first supporting sections and is easier to be deformed to reduce negative effects derived from fixing of the second supporting section.

Further, the supporting structure for a piezoelectric vibrating element according to the preset invention comprises a piezoelectric vibrating element having the first supporting sections formed integrally with the frame section formed surrounding the vibration arms, a base member to which the piezoelectric vibrating element is fixed wherein the frame section formed on the piezoelectric vibrating element is fixed to the base member.

Note that the base member functions as the supporting stage, and denotes a part of a container for encapsulating the piezoelectric vibrating element.

According to the present structure, since the frame section including support sections is fixed to and supported by the base member using, for example, the fixing means described above, the piezoelectric vibration element can more stably be supported. Further, since the piezoelectric vibrating element can directly be fixed to the base member without using the supporting stage described above, the structure can be simplified and miniaturized.

Further, in the supporting structure for a piezoelectric vibrating element, a periphery portion of the frame section of the piezoelectric vibrating element is preferably fixed to a periphery portion of the base member.

Thus, since materials of the fixing means is not limited to the conductive adhesive, and the piezoelectric vibrating element is directly fixed to the base member, fixing strength can be increased to reduce vibration leakage in the piezoelectric vibrator.

A piezoelectric vibrator according to the present invention comprises, a piezoelectric vibrating element described above, a base member to which the piezoelectric vibrating element is fixed, and a lid member for housing and hermetically sealing the piezoelectric vibrating element in cooperation with the base member.

Thus, since the piezoelectric vibrating element is hermetically sealed by the base member and the lid member, the piezoelectric vibrator can be provided that keeps the excited vibrations and the sensing vibrations stable even if vibrations or impacts are applied from the outside. Further, since the inside of the piezoelectric vibrator according to the present invention is kept, for example, vacuum to avoid effects of environmental condition such as moisture or an impact, a predetermined performance can be maintained for a long period of time.

A piezoelectric vibrating gyroscope according to the present invention comprises a piezoelectric vibrating element described above, a drive circuit for exciting the piezoelectric vibrating element to vibrate, and a detection circuit for detecting the sensing vibration generated in the piezoelectric vibrating element in response to application of angular velocity from the outside to the piezoelectric vibrating element.

According to the present invention, since the piezoelectric vibrating element comprises the elastic beams, the piezoelectric vibrating element can be provided in which the excited vibrations and the sensing vibration are kept stable, and the excited vibrations and the sensing vibrations are hard to be affected by supporting the piezoelectric vibrating element if vibrations or impacts are applied from the outside.

Preferred embodiments of the present invention are hereinafter described in detail referring to the accompanying drawings, in which:
- FIG. 1: is a plan view showing a piezoelectric vibrating element according to a first embodiment of the present invention;
- FIG. 2: is a plan view showing electrode patterns on one principal surface of the vibrating element according to the first embodiment;
- FIG. 3: is a plan view showing electrode patterns on the other principal surface of the vibrating element according to the first embodiment;
- FIG. 4: is a cross-sectional view showing a supporting structure for the vibrating element according to the first embodiment;
- FIG. 5: is a cross-sectional view showing the supporting structure for the vibrating element according to the first embodiment;
- FIG. 6: is a plan view showing electrode patterns of a substrate according to the first embodiment;
- FIG. 7: is a plan view showing electrode patterns of the substrate according to the first embodiment;
- FIG. 8: is a schematic view showing an excited vibration of the vibrating element according to the first embodiment;
- FIG. 9: is a schematic view showing a sensing vibration of the vibrating element according to the first embodiment;
- FIG. 10: is a schematic view showing a vibration form of the vibrating element according to the first embodiment;
- FIG. 11: is a schematic view showing a vibration form of the vibrating element according to the first embodiment;
- FIG. 12: is a cross-sectional view showing a piezoelectric vibrating gyroscope according to the first embodiment;
- FIG. 13: is a plan view showing one principal surface of the piezoelectric vibrating element according to a second embodiment of the present invention;
- FIG. 14: is a plan view showing the other principal surface of the vibrating element according to the second embodiment;
- FIG. 15: is a cross-sectional view showing a supporting structure for the vibrating element according to the second embodiment;
- FIG. 16: is a schematic view showing a vibration form of the vibrating element according to the second embodiment;
- FIG. 17: is a schematic view showing a vibration form of the vibrating element according to the second embodiment;
- FIG. 18: is a plan view showing a structure of a piezoelectric vibrator according to a third embodiment of the present invention;
- FIG. 19: is a cross-sectional view showing the structure of the vibrator according to the third embodiment;
- FIG. 20: is a plan view showing a piezoelectric vibrating element according to a fourth embodiment of the present invention;
- FIG. 21: is a plan view showing a modification of the vibrating element according to the fourth embodiment;
- FIG. 22: is a plan view showing another modification of the vibrating element according to the fourth embodiment;
- FIG. 23: is a plan view showing a piezoelectric vibrating element according to a fifth embodiment of the present invention;
- FIG. 24: is a plan view showing a modification of the vibrating element according to the fifth embodiment;
- FIG. 25: is a plan view showing another modification of the vibrating element according to the fifth embodiment;
- FIG. 26(a): is a plan view showing another modification of the vibrating element according to the fifth embodiment, FIGs. 26(b) and 26(c) being cross-sectional views of the modification;
- FIG. 27: is a plan view showing electrode patterns on the front surface of the vibrating element according to the fifth embodiment;
- FIG. 28: is a plan view showing electrode patterns on the reverse surface of the vibrating element according to the fifth embodiment;
- FIG. 29: is a cross-sectional view showing a piezoelectric vibrating gyroscope according to the fifth embodiment of the present invention;
- FIG. 30: is a partial cross-sectional view showing a piezoelectric vibrating gyroscope according to a sixth embodiment of the present invention;
- FIG. 31: is a partial cross-sectional view showing a piezoelectric vibrator according to a seventh embodiment of the present invention.

### First embodiment

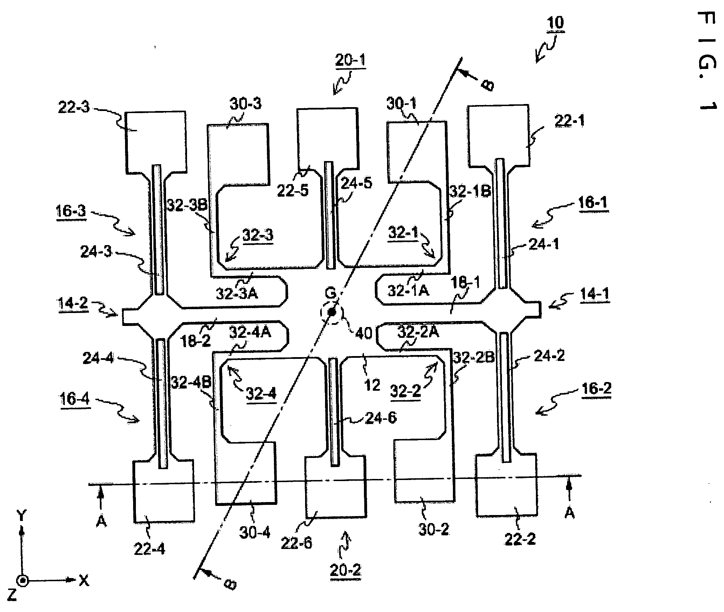

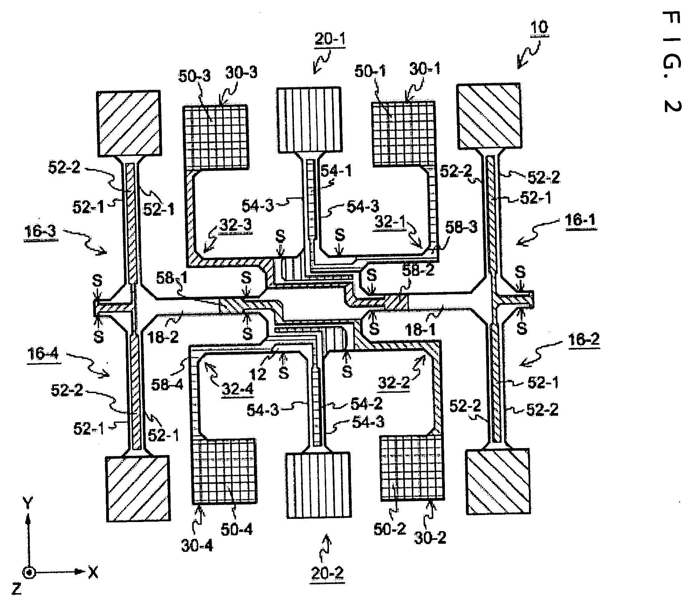

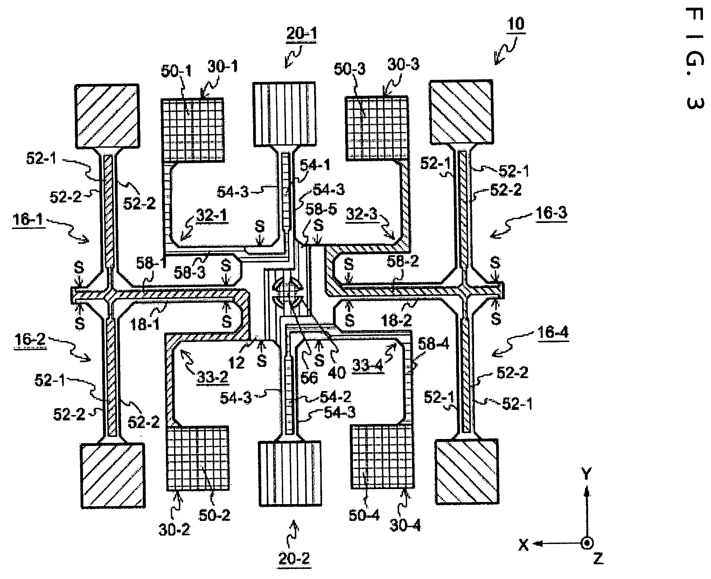

FIG. 1 is a plan view showing the shape of a piezoelectric vibrating element according to a first embodiment. FIGS. 2 and 3 are plan views showing the electrode pattern formed on the surface of the piezoelectric vibrating element. In the first embodiment, the piezoelectric vibrating element is made of quartz, namely a Z-cut quartz substrate that is cut so that, defining the X axis of an X-Y-Z-Cartesian coordinate system an electric axis, the Y axis a mechanical axis, are the Z axis an optical axis. In FIG. 1, the piezoelectric vibrating element 10 is formed in an X-Y plane.

The piezoelectric vibrating element 10 is formed of the quartz substrate of a predetermined thickness. The planar figure of the vibrating element 10 is spreading in the X-Y plane along the crystal axis of the quartz and is point symmetrical about the center point G. The center point G is the center of mass of the vibrating element 10. Although not shown in FIG. 1, a predetermined electrode as described below is formed on the surface of the vibrating element 10 (FIGS. 2 and 3).

The vibrating element 10 has a base section 12 having edge surfaces parallel to the X axis and the Y axis, respectively, a pair of excited vibration systems 14-1, 14-2 each extending in a direction parallel to the X axis from the center of a respective one of the pair of side surfaces of the base section 12 that are parallel to the Y axis, and a pair of sensing vibration arms 20-1, 20-2 each extending in a direction parallel to the Y axis from the center of a respective one of the pair of side surfaces of the base section 12 that are parallel to the X axis. The excited vibration system 14-1 is composed of a connecting arm 18-1 connecting to the side surface of the base section 12 and a pair of excited vibration arms 16-1, 16-2 extending from the connecting arm 18-1 in a direction traversing the connecting arm 18-1. Similarly, the excited vibration arm 14-2 in the opposite side of the center point G is composed of a connecting arm 18-2 and a pair of excited vibration arms 16-3, 16-4.

At the tip of the excited vibration arms 16-1, 16-2, 16-3, and 16-4 there are respectively formed rectangular weight sections 22-1, 22-2, 22-3, and 22-4 that are wider than the other portions of these arms. At the tip of the sensing vibration arms 20-1 and 20-2 there are respectively formed rectangular weight sections 22-5 and 22-6 that are wider than the other portions of these arms.

In the center in the width direction of the excited vibration arms 16-1, 16-2, 16-3, and 16-4 there are formed concave grooves 24-1, 24-2, 24-3, and 24-4 in the thickness direction. In a similar manner, grooves 24-5 and 24-6 are respectively formed in the sensing vibration arms 20-1 and 20-2.

The weight sections 22-1 through 22-6 and the grooves 24-1 through 24-6 are elements for forming the piezoelectric vibrating element in a smaller size but are not essential for the present invention in its broadest aspect.

The width and the length of the excited vibration arms 16-1 through 16-4, the size of the weight sections 22-1 through 22-4, the size of the grooves 24-1 through 24-4 and so forth are designed so as to generate the excited vibration of a predetermined frequency. Similarly, in the sensing vibration arms 20-1 and 20-2 and the connecting arms 18-1 and 18-2, the width and the length of the sensing vibration arms 20-1 and 20-2, the size of the weight sections 22-5 and 22-6, the size of the grooves 24-5 and 24-6 and so forth are designed so as to generate a predetermined sensing vibration.

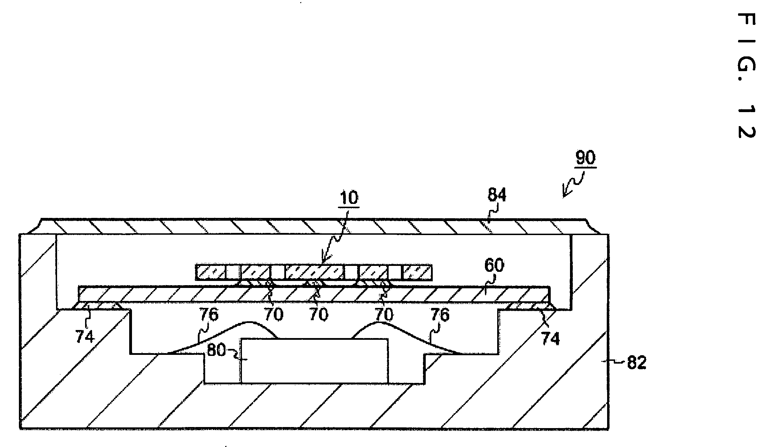

In the vibrating element 10, a second supporting section 40 is formed in the center of one surface of the base section 12, the second supporting section 40 including the center point G. The second supporting section 40 is a small region around the center of the base section 12 on the surface that faces a supporting stage when the vibrating element 10 is mounted on a substrate 60 (FIG. 12) described below so as to face the substrate 60. The second supporting section 40 is substantially a circle having an area smaller than that of the base section 12 by a factor of ¼ to 1/1000. The factor is preferably set to 1/16 to 1/100.

At the tips of the beams 32-1, 32-2, 32-3, and 32-4, there are respectively formed first supporting sections 30-1, 30-2, 30-3, and 30-4 each having a substantially rectangular shape. The vibrating element 10 according to the present embodiment 1 is formed having four of the first supporting sections 30-1 through 30-4 described above and the second supporting section 40, i.e., a total of five supporting sections, and is mounted on the substrate 60 described below.

Furthermore, the beams 32-1 through 32-4 are formed to have shapes elastic with respect to a vibration of the periphery of the base section 12 to absorb vibrations or impacts from the outside when the vibrating element 10 is mounted on the substrate 60.

Since the vibrating element 10 according to the present embodiment 1 can be formed as a single piece by etching using a photolithographic technology, a plurality of piezoelectric vibrating elements can be formed simultaneously.

Hereinafter, the electrode pattern of the vibrating element 10 according to the present embodiment 1 is described referring to FIGS. 2 and 3. FIG. 2 is a plan view showing an electrode pattern on one principal surface of the piezoelectric vibrating element. FIG. 3 is a plan view showing an electrode pattern on the other principal surface thereof. Here, "principal surface" denotes a surface of the vibrating element 10 parallel to the X-Y plane, the surface shown in FIG. 3 facing the substrate 60 as a supporting stage in a supporting structure for the vibrating element 10 as described below (FIG. 12). In FIGS. 2 and 3, shaded portions denote conduction electrodes, and for ease of discriminating plural types of electrodes they are denoted with hatching, vertical stripes, and horizontal stripes. Although not shown in the drawings, electrodes are formed also on surfaces parallel to the Z axis (herein after referred to as side surfaces). Note that on the side surfaces pointed by arrows S no electrodes are formed to have electrical insulation with adjacent electrodes.

On both of the principal surfaces of the excited vibration arms 16-1 and 16-2 first exciting electrodes 52-1 elongated along the length direction of the arms are formed in the center of the arm width. On both side surfaces thereof, second exciting electrodes 52-2 are formed. In contrast, on both of the principal surfaces of the excited vibration arms 16-3 and 16-4, second exciting electrodes 52-2 elongated along the length direction of the arms are formed in the center of the arm width. On both side surfaces thereof, the first exciting electrodes 52-1 are formed.

The exciting electrodes 52-1 are connected by connecting electrodes 58-1 formed on the connecting arms 18-1, 18-2 and the base section 12, and further connected to conduction electrodes 50-2 formed on the surfaces of the first supporting section 30-2. Similarly, the second exciting electrodes 52-2 are connected to conduction electrodes 50-3 formed on the surfaces of the first supporting section 30-3 via the connecting electrode 58-2.

On both of the principal surfaces of the sensing vibration arms 20-1, first sensing electrodes 54-1 elongated along the length direction of the arms are formed in the center of the arm width. Similarly, on both of the principal surfaces of the sensing vibration arms 20-2, second sensing electrodes 54-2 are formed. Third sensing electrodes 54-3 are formed on both side surfaces of the sensing vibration arms 20-1 and 20-2.

The first sensing electrodes 54-1 are connected to conduction electrodes 50-1 formed on both surfaces of the first supporting section 30-1 via connecting electrodes 58-3 formed on the base section 12 and the beam 32-1. Similarly, the second sensing electrodes 54-2 are electrically connected to conduction electrodes 50-4 formed on the surfaces of the first supporting section 30-4 via connecting electrodes 58-4. The third sensing electrodes 54-3 are connected by connecting electrodes 58-5 formed on the base section 12 to a conduction electrode 56 formed on the second supporting section 40.

As described above, in the vibrating element 10, by applying exciting signals between the conduction electrodes 50-2 formed on the first supporting section 30-2 and the conduction electrodes 50-3 formed on the first supporting section 30-3, an electric field can be generated between the first exciting electrodes 52-1 and the second exciting electrodes 52-2 to make the excited vibration arms 16-1, 16-2, 16-3, and 16-4 excitedly vibrate.

Further, a sensing vibration generated in the sensing vibration arm 20-1 appears as an electric charge between the first sensing electrodes 54-1 and the third sensing electrodes 54-3 that can be obtained as an electric signal from the conduction electrodes 50-1 formed on the first supporting section 30-1 and the conduction electrode 56 formed on the second supporting section 40. Likewise, a sensing vibration generated in the sensing vibration arm 20-2 can be obtained as an electric signal from the conduction electrodes 50-4 formed on the first supporting section 30-4 and the conduction electrode 56 formed on the second supporting section 40.

Note that the electrode pattern of the piezoelectric vibrating element of the present embodiment 1 as described above can be provided by forming a metal film on a surface of the vibrating element 10 followed by shaping it by etching using a photolithographic technology.

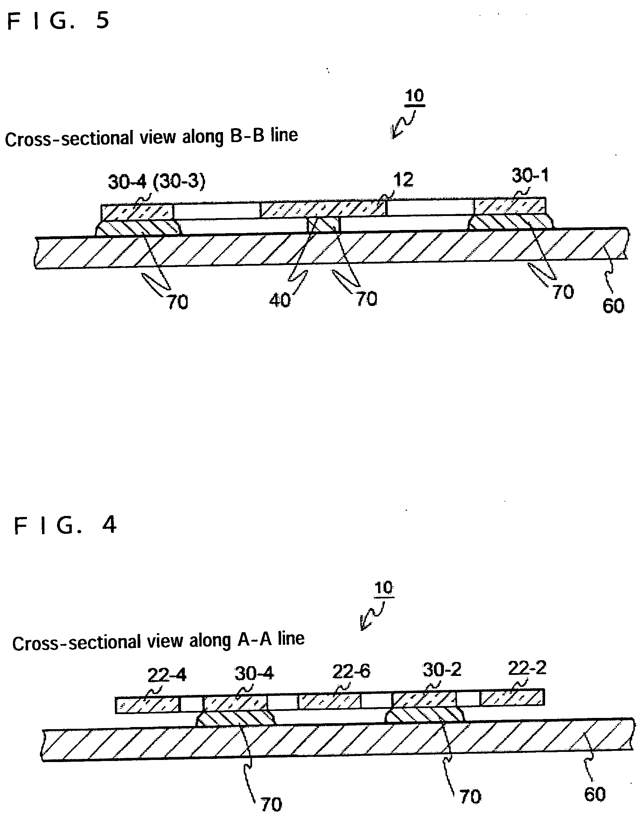

Following the above, the supporting structure for the vibrating element 10 according to the present embodiment 1 is described referring to FIGS. 4 and 5. FIG.4 shows a cross-sectional view of the supporting structure at a position corresponding to the A-A line of the vibrating element 10 shown in FIG. 1. FIG. 5 likewise shows a cross-sectional view of the supporting structure at a position corresponding to the B-B line in FIG. 1. In the present embodiment, conductive adhesive 70 is used as fixing means, and the substrate 60 made of a ceramic material or the like is used as the supporting stage for mounting the vibrating element 10.

In FIGS. 4 and 5, the vibrating element 10 is oppositely mounted on the substrate 60. The vibrating element 10 is fixed by adhering the first supporting sections 30-1, 30-2, 30-3, and 30-4 to the substrate 60 with the conductive adhesive 70. Since the conductive adhesive 70 has a certain thickness, the vibrating element 10 is mounted on the substrate 60 with a gap to prevent the excited vibration systems 14-1 and 14-2 and the sensing vibration arms 20-1 and 20-2 from abutting on the substrate 60.

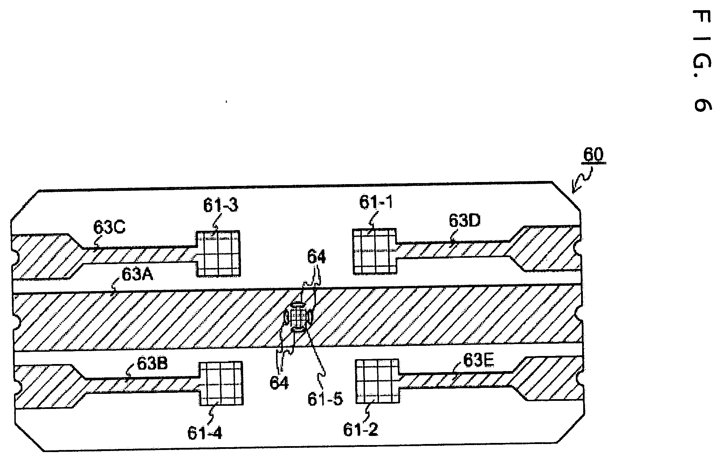

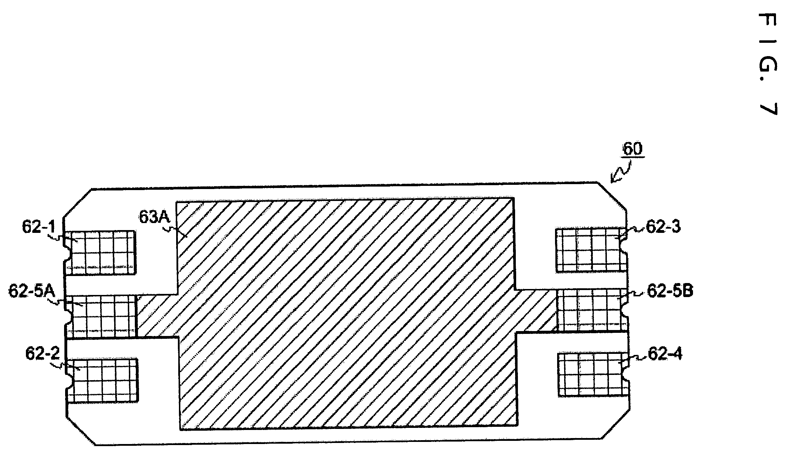

On the substrate 60, there are formed electrode patterns shown in FIGS. 6 and 7 as described below to respectively provide electrical connections with the conduction electrodes 50-1, 50-2, 50-3, 50-4, and 56 via the conductive adhesive 70.

In this case, the conductive adhesive 70 is preferably an elastic material. As an example of such an elastic conductive adhesive, conductive adhesive using silicone resin as the base material is known.

FIGS. 6 and 7 show the electrode patterns of the substrate 60. FIG. 6 shows the electrode patterns on the surface on which the vibrating element 10 is mounted, and FIG. 7 shows the electrode patterns on the opposite surface. In FIGS. 6 and 7, hatched portions denote the electrode patterns, and checked portions denote electrode lands for providing electrical connections with external components.

In FIG. 6, vibrating element mounting electrode lands 61-1, 61-2, 61-3, and 61-4 are formed on substantially the center portion of the substrate 60 on which the first supporting sections 30-1, 30-2, 30-3, and 30-4 are fixedly adhered respectively. Further, on the vibration element mounting electrode land 61-5 surrounded by a plurality of electrode slits 64, the second supporting section 40 of the vibrating element 10 is fixedly adhered. The electrode slits 64 are provided for preventing the conductive adhesive 70 from flowing out of the vibrating element mounting electrode land to the periphery thereof.

In FIG. 7, external connection electrode lands 62-1, 62-2, 62-3, 62-4, 62-5A, and 62-5B are formed on both shorter sides of the rectangle like shape of the substrate 60. The external connection electrode lands 62-1, 62-2, 62-3, 62-4, 62-5A, and 62-5B are respectively connected to the vibrating element mounting electrode lands 61-1, 61-2, 61-3, 61-4, and 61-5 via electrode patterns 63D, 63E, 63C, 63B, and 63A shown in FIG. 6.

As described above, in the supporting structure for the vibrating element 10 of the present embodiment 1, the conductive adhesive 70 is used as the fixing means for supporting and fixing the five points, namely the four of the first supporting sections 30-1, 30-2, 30-3, and 30-4 and that of the second supporting section 40 provided on the vibrating element 10, the structure also providing electrical connection with the vibrating element mounting electrode lands 61-1, 61-2, 61-3, 61-4, and 61-5 formed on the substrate 60.

Hereinafter, the operation of the vibrating element 10 supported by the supporting structure according to the present embodiment 1 will be described. The vibrating element 10 absorbs vibrations generated in the periphery of the base section 12 by distortion of the beams 32-1, 32-2, 32-3, and 32-4. Thus, if portions (specifically the first supporting sections 30-1, 30-2, 30-3, and 30-4) other than the center portion of the base section 12 where large vibrations are not generated are supported to be fixed, the excited vibrations and the sensing vibrations are hardly suppressed.

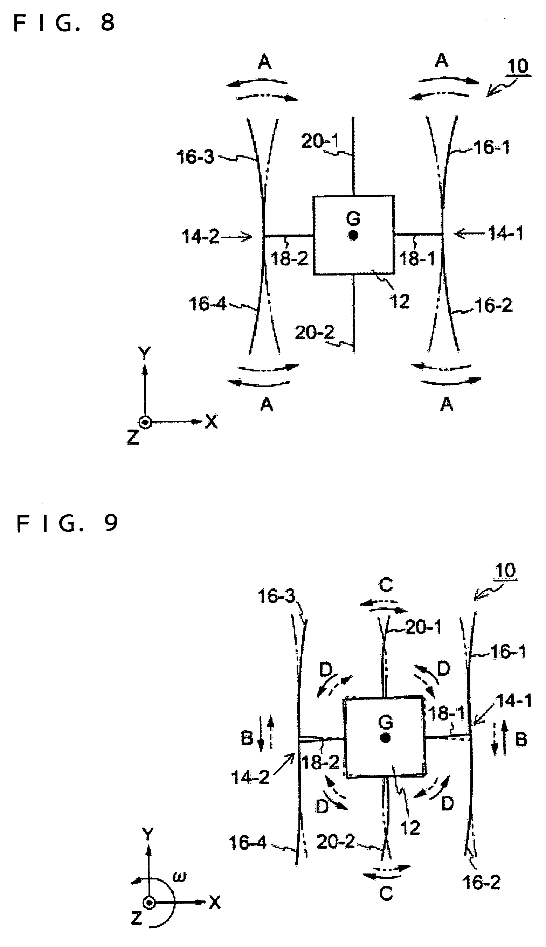

FIGS. 8 and 9 are plan views for schematically describing the operation of the vibrating element 10 according to the present embodiment 1. In FIGS. 8 and 9, each vibration arm is simply illustrated as a line in order to express the vibration form in a way easy to understand. Further, the beams 32-1, 32-2, 32-3, and 32-4 are omitted.

FIG.8 is a drawing for explaining the excited vibration. In FIG. 8, the excited vibration is a bending vibration of the excited vibration arms 16-1, 16-2, 16-3, and 16-4 denoted by the arrows A in which the arms repeat taking one vibration shape illustrated by a solid line and then taking the other vibration shape illustrated by a broken line at a predetermined frequency. In this case, since a pair of the excited vibration arms 16-1, 16-2 and a pair of the excited vibration arms 16-3, 16-4 vibrate symmetrically with respect to an axis that is parallel to the Y axis and passes over the center point G, the base section 12, the connecting arms 18-1, 18-2, and sensing vibration arms 20-1, 20-2 hardly vibrate.

FIG. 9 is a drawing for explaining the sensing vibration. According to FIG. 9, in the sensing vibration, the vibration arms repeat taking one vibration shape illustrated by a solid line and then taking the other vibration shape illustrated by a broken line at the frequency of the excited vibration. The sensing vibration is generated by the Coriolis force of the direction denoted by the arrow B acting on the excited vibration systems 14-1 and 14-2 when an angular velocity ω around the Z axis is applied to the vibrating element 10 while the vibrating element 10 is performing the excited vibration as shown in FIG. 8.

According to the above, the excited vibration systems 14-1 and 14-2 vibrate as denoted with the arrow B. The vibration denoted with the arrow B is a vibration in a rotational direction around the center point G. At the same time, the sensing vibration arms 20-1 and 20-2 vibrate, as denoted with the arrow C, in the opposite rotational direction to the arrow B in response to the vibration of arrow B.

In this case, the periphery of the base section 12 vibrates, as denoted with the arrow D, in a rotational direction around the center point G. This is because the sensing vibration is not a balancing vibration of the sensing vibration arms 20-1, 20-2 with only the excited vibration systems 14-1, 14-2 but is rather a balancing vibration including the base section 12.

Although the vibration amplitude of the periphery of the base section 12 as denoted with the arrow D is small in comparison with the vibration amplitude of excited vibration systems 14-1, 14-2 as denoted with the arrow B or the vibration amplitude of the sensing vibration arms 20-1, 20-2 as denoted with the arrow C, if, for example, the peripheral portion of the base section 12 is fixedly adhered to the substrate 60 by the conductive adhesive or the like, the vibration amplitude of the periphery of the base section 12 is suppressed and accordingly the whole sensing vibration is suppressed.

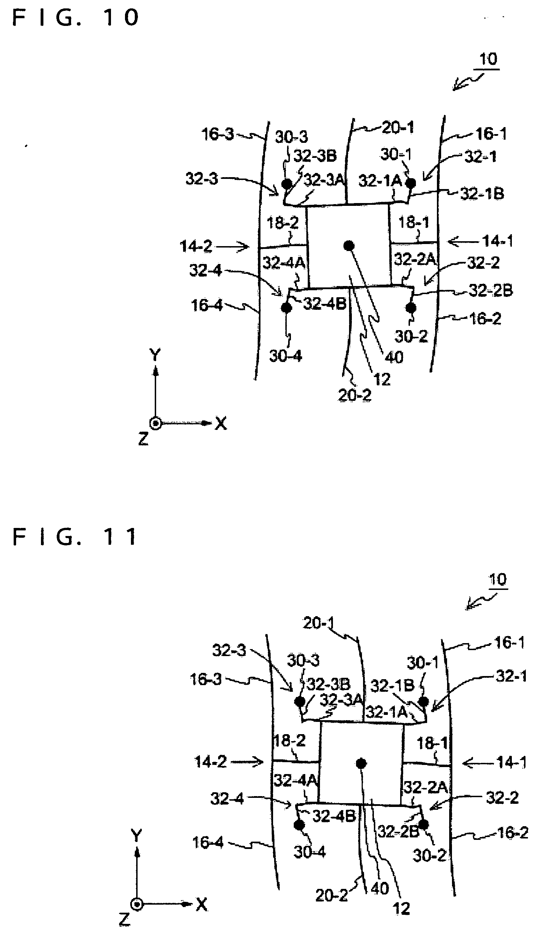

FIGS. 10 and 11 are schematic plan views for explaining the vibration form of the sensing vibrations according to the present embodiment 1 in further detail. In FIGS. 10 and 11, the beams 32-1, 32-2, 32-3, 32-4, the first supporting sections 30-1, 30-2, 30-3, and 30-4 are added to the drawing shown in FIG. 9. Each of the vibration arms and the beams is expressed by a line, and each of the supporting sections is expressed by a dot. The vibration form shown in FIG. 10 corresponds to the vibration form expressed by the solid lines of FIG. 9, and the vibration form shown in FIG. 11 corresponds to the vibration form expressed by the broken lines of FIG. 9.

In FIGS. 10 and 11, since the first supporting sections 30-1, 30-2, 30-3, 30-4, and the second supporting section 40 are fixedly adhered to the substrate 60, the positional relationships thereof are maintained in each of the vibration forms. Regarding the sensing vibration, the periphery of the base section 12 vibrates in the rotational direction around the center point G as explained referring to FIG. 9. In this case, the beams 32-1, 32-2, 32-3, and 32-4 can be bent in response to movement of the periphery of the base section 12.

Since the beams 32-1, 32-2, 32-3, and 32-4 include beams 32-1B, 32-2B, 32-3B, and 32-4B that are parallel to the Y axis and easy to be bent in the X axis direction and beams 32-1A, 32-2A, 32-3A, and 32-4A that are parallel to the X axis and easy to be bent in the Y axis direction, the beams can deal with the vibration of the base section 12 in the rotational direction (i.e., the base section 12 can easily turn around the Z axis).

Hereinafter, the structure of a gyroscope 90 using the vibrating element 10 according to the present embodiment 1 is described with reference to FIG. 12. FIG. 12 is a cross-sectional view showing the structure of the gyroscope 90. In FIG. 12, the gyroscope 90 comprises the vibrating element 10 and a semiconductor device 80 encapsulated in a container formed of a base member 82 and a lid member 84. The container provides hermetic sealing to maintain a vacuum in its inside.

The base member 82 is formed of laminated ceramics, and is provided with necessary electrode wiring. A metal film is formed on the upper surface of the periphery of the base member 82, and the lid member 84 made of metal is welded on the upper surface of the base member 82.

The semiconductor device 80 comprises a drive circuit for exciting the vibrating element 10 to vibrate and a detection circuit for detecting the sensing vibration generated at the vibrating element 10 when an angular velocity is externally applied to the vibrating element 10 to output an electric signal in accordance the angular velocity.

The semiconductor device 80 is fixed to the surface of a lowest step of the stepped base member 82 and is connected to the electrode wiring (not shown in the drawings) formed on the base member 82 via gold wires 76. The vibrating element 10 is fixedly adhered to the substrate 60 by the conductive adhesive 70, and the substrate 60 is fixedly adhered to a medium step of the base member 82 by a conductive adhesive 74.

According to the structure described above, the excitation electrodes and the sensing electrodes formed on the vibrating element 10 are connected to the semiconductor device 80 via the electrode patterns formed on the substrate 60, the electrode wiring provided on the base member 82, and the gold wires 76. Thus, the vibrating element 10 is excited to vibrate by the drive circuit of the semiconductor device 80 and output a signal caused by the sensing vibration corresponding to the angular velocity to the detection circuit of the semiconductor device 80. The semiconductor device 80 outputs an electric signal corresponding to the angular velocity.

Therefore, according to the first embodiment as described above, since the vibrating element 10 is fixed to the substrate 60 by the five supporting sections, namely the first supporting sections 30-1, 30-2, 30-3, and 30-4 provided on the tips of the beams 32-1 through 32-4 extending linearly from the base section 12, and the second supporting section 40 provided on the center portion of the base section 12, the vibrating element 10 can be supported on the substrate 60 with a stable posture.

Since the beams 32-1 through 32-4 are formed to have shapes elastic with respect to the vibration of the periphery of the base section 12, negative effects, on the excited vibrations or the sensing vibrations, from the fixing of the vibrating element 10 to the substrate 60 can be reduced or avoided, and further, negative effects, on a drive signal or the sensing vibrations, from externally applied vibrations or impacts can also be reduced by absorbing them by the beams 32-1 through 32-4.

Since the exciting electrodes 52-1, 52-2 and the sensing electrodes 54-1 through 54-3 formed on the surface of the respective vibration arms of the vibrating element 10 are connected to the conduction electrodes 50-1 through 50-4, and 56 formed on the surface of the respective supporting sections, predetermined electrical connections can be provided by the conduction electrodes 50-1 through 50-4, and 56 simplifying the structures of the electrode patterns.

According to the supporting structure for the vibrating element 10 of the present embodiment 1, since the vibrating element 10 is supported by the five supporting sections, a stable posture thereof with respect to the substrate 60 can be maintained if external vibrations or impacts are applied thereto. Further, since the gap between the vibrating element 10 and substrate 60 can be stably maintained to prevent the excited vibration arms 16-1 through 16-4 and the sensing vibration arms 20-1, 20-2 from abutting on the substrate even if vibrations or impacts are externally applied, the excited vibrations and the sensing vibrations can be stably maintained.

Since the conductive adhesive 70 is used as fixing means, the electrical connection can be provided in a reduced space without using other electrical connection means such as metal wires.

Because the conductive adhesive 70 has elasticity, vibrations and impacts applied from the outside can be absorbed to maintain the excited vibrations and the sensing vibrations more stably. Further, since the fixing means serves as a buffer member of vibrations leaking to the respective supporting sections, negative effects, on the excited vibrations or the sensing vibrations, from the fixing of the respective supporting sections can further be reduced.

Since the gyroscope 90 includes the vibrating element 10 according to the present embodiment 1 that is maintained in a stable posture and the supporting structure for the vibrating element, the gyroscope 90 can stably operate without any disturbance in the vibrations even if external vibrations or impacts are applied. Further, since a vacuum condition is maintained in the container of the gyroscope to avoid any effects from the environmental condition such as moisture or an impact, a predetermined performance can be maintained for a long period of time.

### Second embodiment

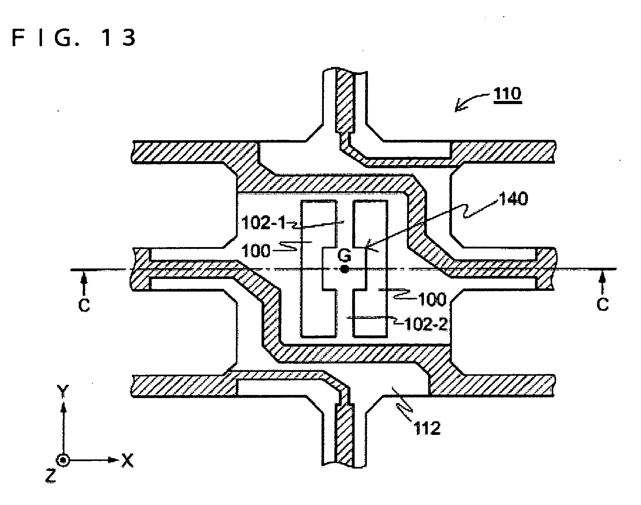

Hereinafter, the configuration of a second embodiment according to the present invention is described referring to FIGS. 13 through 17.

The second embodiment is characterized by the structure of a second supporting section 140 provided on a base section 112 of a piezoelectric vibrating element 110 in comparison with the configuration of the first embodiment.

Firstly, the shape of the vibrating element 110 according to the present embodiment 2 is described.

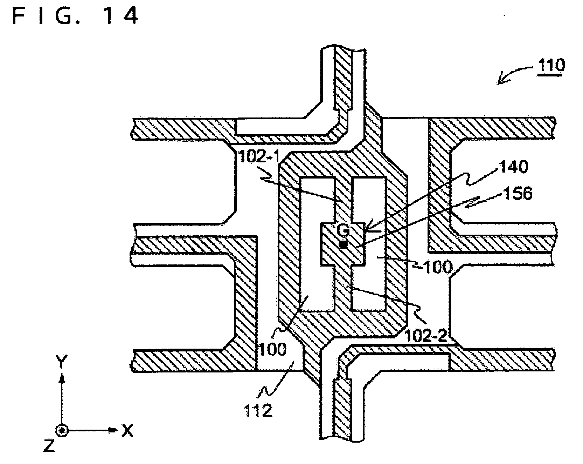

FIGS. 13 and 14 are plan views showing the shape and electrode patterns of the base section 112 of the vibrating element 110 according to the second embodiment. FIG. 13 shows one principal surface, and FIG. 14 shows the other principal surface. The shape and electrode patterns of each arm section are the same as those of the first embodiment, and are accordingly, omitted in FIGS. 13 and 14.

According to FIGS. 13 and 14, the base section 112 of the vibrating element 110 has a pair of openings 100 formed in the center portion of the base section 112 on two opposite sides of the center point G. Second beams 102-1, 102-2 with elasticity are formed between the pair of openings, and a second supporting section 140 is formed in the center portion of the whole of the second beams 102-1, 102-2. The center of the second supporting section 140 is substantially identical to the center point G of the vibrating element 110.

Further, the centerline of the second beams 102-1, 102-2 in the extending (longitudinal) direction is parallel to the Y axis and passes over the center point G (note that the definition of the X-Y-Z coordinate system from the first embodiment applies to this second and the following embodiments in the same way). The width and the length of each portion of the second beams 102-1, 102-2 is arranged to provide an appropriate elasticity in the Y axis direction.

In FIGS. 13 and 14, the hatched portions indicate electrode patterns. A conduction electrode 156 is formed on a surface of the second supporting section 140. The electrical connections in various portions by the connecting electrodes are the same as in the first embodiment, and accordingly, the descriptions thereof are omitted here.

Hereinafter, a supporting structure for the vibrating element 110 according to the present embodiment 2 is described.

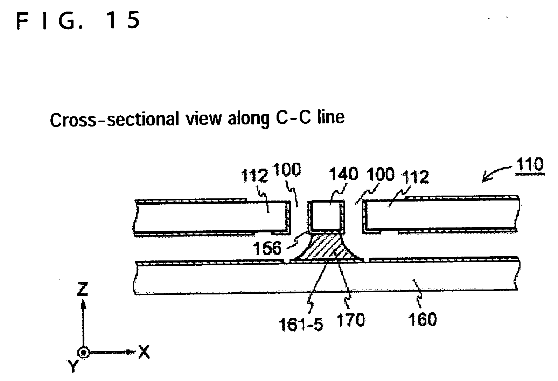

FIG. 15 is a cross-sectional view showing the supporting structure of the vibrating element 110 according to the present embodiment 2 at a position corresponding to the C-C line in FIG. 13. According to FIG. 15, the second supporting section 140 is positioned away from the base section by the width of the openings 100 and is fixedly adhered to a substrate 160 by conductive adhesive 170. The conduction electrode 156 is electrically connected to a vibrating element mounting electrode land 161-5.

Hereinafter, the operation of the vibrating element 110 according to the present embodiment 2 is described.

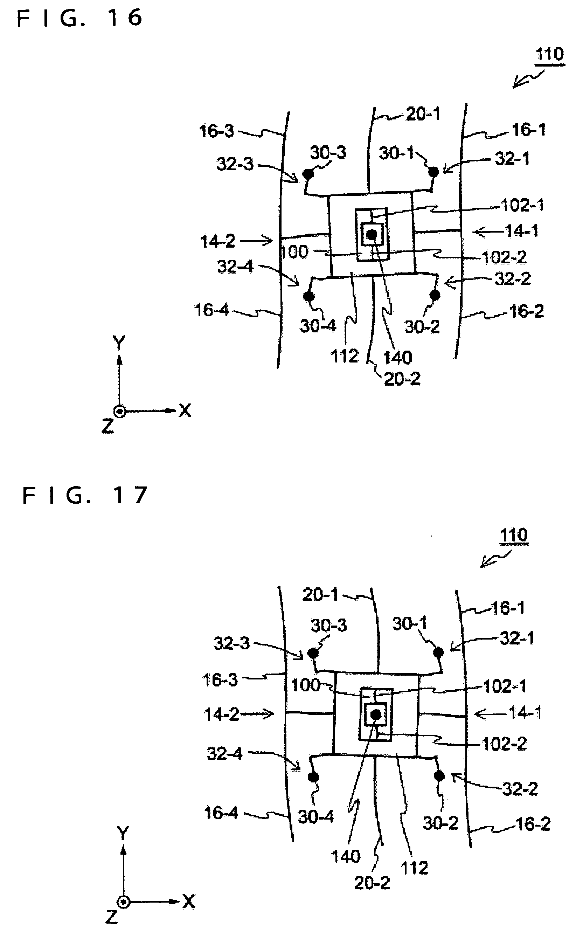

FIGS. 16 and 17 are plan views schematically showing vibration forms of the detection vibration in the vibrating element 110 according to the present embodiment 2. As is the case with FIGS. 10 and 11, each of the vibration arms and beams is illustrated as a line and each of the supporting sections is illustrated as a dot. The vibration form corresponding to the solid lines in FIG. 9 is shown in FIG. 16, and the vibration form corresponding to the broken lines in FIG. 9 is shown in FIG. 17.

According to FIGS. 16 and 17, the periphery of the base section 112 vibrates in rotational directions around the center point G, as is the case with the first embodiment described above. The inner edge of the openings 100 to which the second beams 102-1, 102-2 are connected also vibrates in rotational directions around the center point G. In this case, the second beams 102-1, 102-2 can be elastically deformed in rotational directions while pivoting on the second supporting section 140.

Therefore, according to the structure of the second embodiment described above, since the second supporting section 140 formed on the base section 112 is provided in addition to the first supporting sections 30-1 through 30-4 described above, the second supporting section 140 also comprising the beams 102-1, 102-2 having elasticity, vibrations around base section 112 are absorbed by the beams to reduce propagation of the vibrations to the second supporting section 140. Thus, negative effects on the excited vibrations or the sensing vibrations that could otherwise result from providing the second supporting section 140 can be reduced.

### Third embodiment

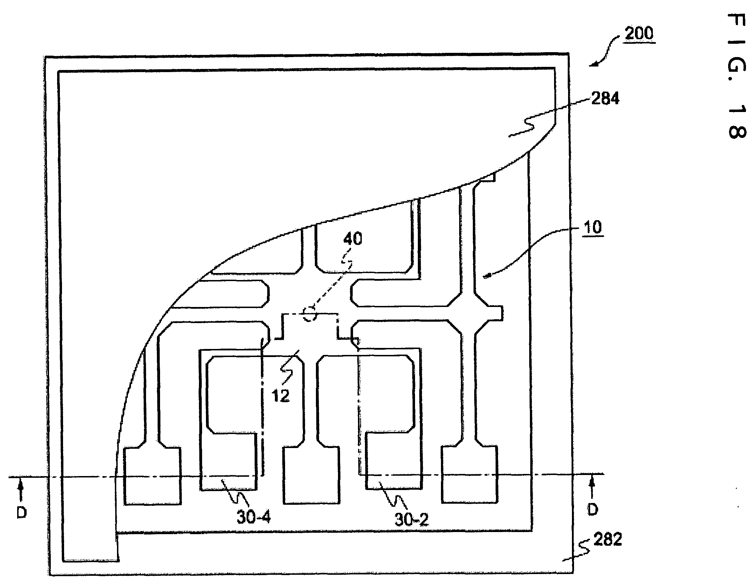

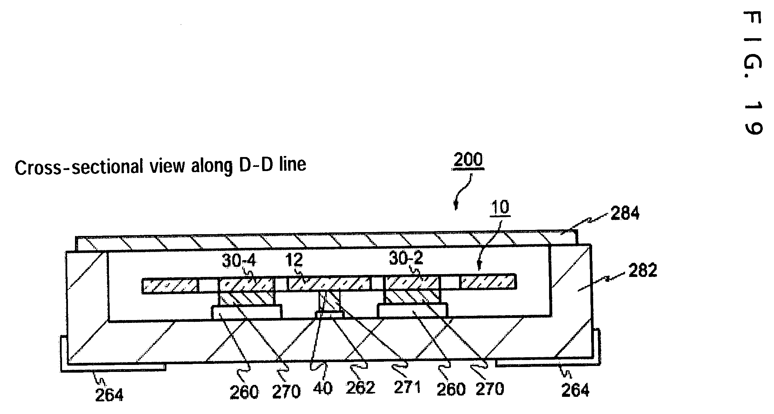

Hereinafter, the configuration of a third embodiment of the supporting structure for the piezoelectric vibrating element according to the present invention is described referring to FIGS. 18 and 19. FIGS. 18 and 19 show the structure of a piezoelectric vibrator used for piezoelectric vibrating gyroscopes.

FIG. 18 is a plan view of a piezoelectric vibrator 200 according to the present embodiment 3 with a part of a lid member cut out to make the inside visible. FIG. 19 is a cross-sectional view along the D-D line shown in FIG. 18. The shape of the vibrating element 10 employed in the structure of the present embodiment 3 is the same as that of the vibrating element 10 explained as the first embodiment.

In FIGS. 18 and 19, the vibrator 200 is formed of the vibrating element 10 encapsulated in a container composed of a base member 282 and a lid member 284. On the bottom surface of the hollow of the base member 282, there are formed supporting electrodes 260 protruding therefrom, the first supporting sections 30-1, 30-2, 30-3, and 30-4 of the vibrating element 10 being fixedly adhered to the supporting electrodes 260 by conductive adhesive 270. Further, the second supporting section 40 is fixedly adhered to an electrode land 262 formed on the bottom surface of the hollow of the base member 282 by conductive adhesive 271.

The base member 282 is formed of a laminated ceramics material. The supporting electrodes 260 and the electrode land 262 are respectively connected to external connecting electrodes 264 formed on the outer surface of the base member 282. The supporting electrodes 260 are formed to be higher than the electrode land 262 by, for example, printing only the supporting electrodes 260 a number of times when depositing a material of the electrode land 262 on the ceramics material by screen printing.

The lid member 284 is made of metal and welded to a metal layer formed on the upper surface of the base member 282. A vacuum is maintained inside the container.

The vibrator 200 according to the present embodiment 3 is mounted on a circuit board (not shown in the drawings) of the piezoelectric vibrating gyroscope. By connecting the external connecting electrodes 264 to a drive circuit and a detection circuit, the gyroscope can be composed.

According to the supporting structure for the vibrating element 10 of the present embodiment 3 described above, since the conductive adhesive 271 for the second supporting section 40 is thicker than the conductive adhesive 270 for the first supporting section 30-1 through 30-4, and accordingly easy to be deformed in response to a movement of the second supporting section 40, especially to the vibrations of the base section 12 in rotational directions in its plane, negative effects on the excited vibrations or the sensing vibrations due to fixing the second supporting section 40 can be reduced.

Although in the present embodiment 3, the vibrating element 10 shown in the first embodiment described above is used as the vibrating element, the vibrating element 110 described as the second embodiment can also be used to reduce negative effects on the excited vibrations or the sensing vibrations due to fixing the second supporting section 140.

### Fourth embodiment

Subsequently, another embodiment of the piezoelectric vibrating element is described referring to the accompanying drawings.

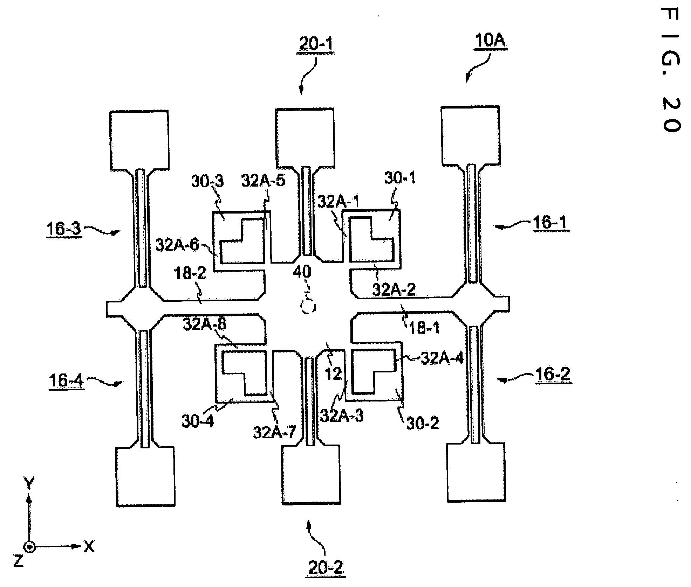

FIGS. 20 through 22 show plan views of a piezoelectric vibrating element of a fourth embodiment according to the present invention. The fourth embodiment is characterized by the shapes of the beams and the shapes of the supporting section formed at the tip of the beams in the vibrating element 10 (FIG. 1) described as the first embodiment. In FIGS. 20 through 22, the same elements as those of the vibrating element 10 according to the first embodiment are denoted with the same reference numerals and not described again.

A vibrating element 10A shown in FIG. 20 is provided with four pairs of beams 32A-1 and 32A-2, 32A-3 and 32A-4, 32A-5 and 32A-6, and 32A-7 and 32A-8, each beam having elasticity, and the beams of each pair being perpendicular to each other and connected to a respective corner of the base section 12; the first supporting sections 30-1, 30-2, 30-3, and 30-4 are provided at the tip of the orthogonal beams of the respective pairs of beams. The second supporting section 40 is provided in the center portion of the base section 12 and is fixed to the substrate 60 as the supporting stage by the conductive adhesive thus forming a supporting structure similar to that of the first embodiment described above (FIG. 12).

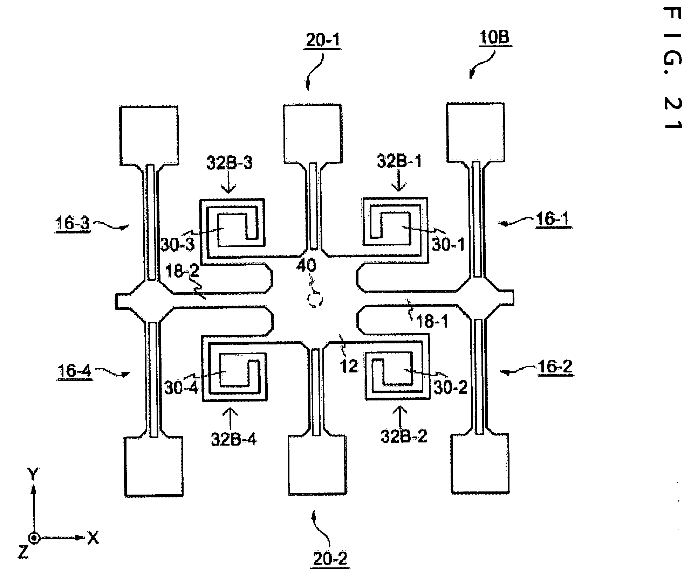

FIG. 21 shows a piezoelectric vibrating element 10B having differently shaped beams extending from the base section 12. Since all elements other than the beams and the first supporting sections are the same as those in the first embodiment (FIG. 1), descriptions for the common elements are omitted, and the same reference numerals as in the first embodiment are used for the common elements. According to FIG. 21, the vibrating element 10B is provided with beams 32B-1, 32B-2, 32B-3, and 32B-4 connected to the four corners of the base section 12, each continuously formed like a square spiral having sides of four beams. The first supporting sections 30-1, 30-2, 30-3, and 30-4 are formed at the tips of the respective beams and inside the squares formed of the beams. At the center of the base section 12, there is provided the second supporting section 40 that is fixed to the substrate 60 as the supporting stage by the conductive adhesive thus forming a supporting structure similar to that of the first embodiment described above (FIG. 12).

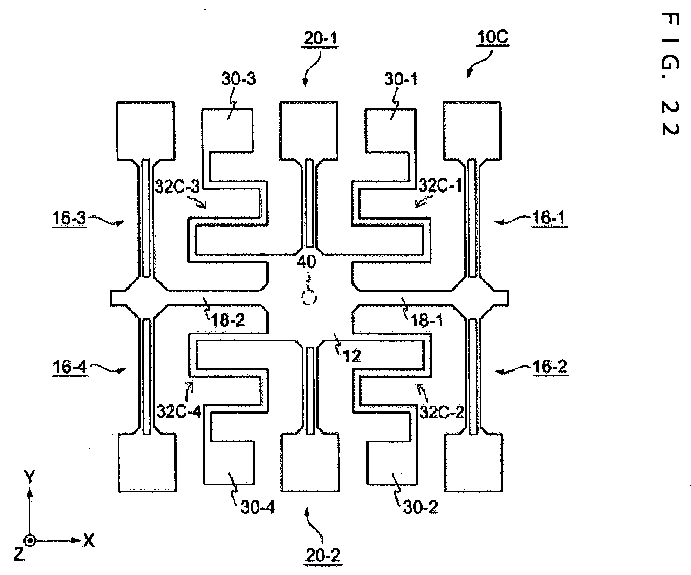

FIG. 22 shows another piezoelectric vibrating element 10C according to the fourth embodiment. Since all elements other than the beams and the first supporting sections are the same as those in the first embodiment (FIG. 1), descriptions for the common elements are omitted, and the same reference numerals as in the first embodiment are used for the common elements. According to FIG. 22, the vibrating element 10C is provided with beams 32C-1, 32C-2, 32C-3, and 32C-4 shaped like a letter S and connected to the four corners of the base section 12. The first supporting sections 30-1, 30-2, 30-3, and 30-4 shaped like a rectangle are formed at the tips of the beams. At the center of the base section 12, there is provided the second supporting section 40 that is fixed to the substrate 60 as the supporting stage by the conductive adhesive thus forming a supporting structure similar to that of the first embodiment described above (FIG. 12).

According to the fourth embodiment described above, since the length of the elastic portion can be adjusted to make the beams easier to be bent by variously modifying the length or the shape of the beams of the vibrating elements 10A, 10B, and 10C, the vibrations of the base section 12 can be prevented from propagating to the supporting sections without changing the size of the vibrating element to provide stable excited vibrations or sensing vibrations.

Note that, although the second supporting section 40 is the same as that of the first embodiment, the second beams with elasticity can also be used in the base section 12 as is the case with the second embodiment to provide the further stable excited vibrations or sensing vibrations.

### Fifth embodiment

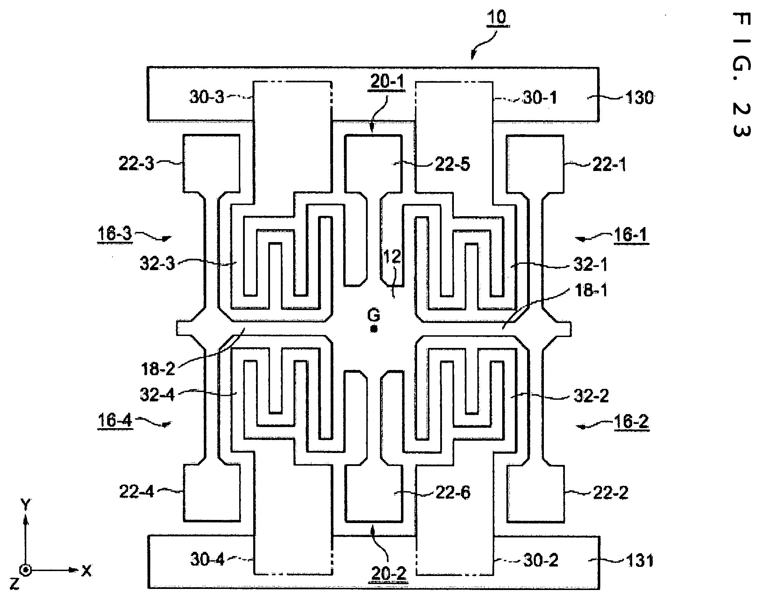

FIGS. 23 through 25 are plan views of a piezoelectric vibrating element according to a fifth embodiment. Since the piezoelectric vibrating element according to the fifth embodiment is characterized by the shapes of the beams and the supporting sections shown in the first embodiment, and all other elements are the same as those in the first embodiment (FIG. 1), descriptions for the common elements are omitted, and the same reference numerals as in the first embodiment are used for the common elements. According to FIG. 23, the vibrating element 10 is provided with the base section 12 in a substantially rectangular form in the center portion thereof, the connecting arms 18-1 and 18-2 extending from edges of the base section 12 opposing each other in the X axis direction, pairs of the excited vibration arms 16-1 and 16-2, 16-3 and 16-4 extending from nearly the tips of the connecting arms 18-1 and 18-2 in the directions perpendicular thereto, and pairs of the weight sections 22-1 and 22-2, 22-3 and 22-4 formed on the tips of the excited vibration arms.

The sensing vibration arms 20-1 and 20-2 extend from a pair of edges of the base section 12 opposing each other in the Y axis direction, and the weight sections 22-5 and 22-6 shaped substantially rectangular are formed at the tips thereof. The shapes of the base section, the excited vibration arms, and the sensing vibration arms described above are the same as those of the vibrating element 10 of the first embodiment (shown in FIG.1). The beams 32-1, 32-2, 32-3, and 32-4 with elasticity whose cross-sectional shapes are rectangular extend from the four corners of the base section 12 parallel to the Y axis. These beams 32-1, 32-2, 32-3, and 32-4 are formed in a shape having continuing cranks and a wider tip portions. The wider tip portions (illustrated by chain double-dashed lines) correspond to the first supporting sections 30-1, 30-2, 30-3, and 30-4 shown in the first embodiment.

Out of the first supporting sections described above, the supporting section 30-1 and the supporting section 30-3 extending in the same direction along the Y axis are connected to a frame section 130, and the other supporting sections 30-2 and 30-4 are connected to a frame section 131, each forming a single body.

Note that vibrating element 10 is symmetric around the center point G of the base section 12 in both the X direction and the Y direction.

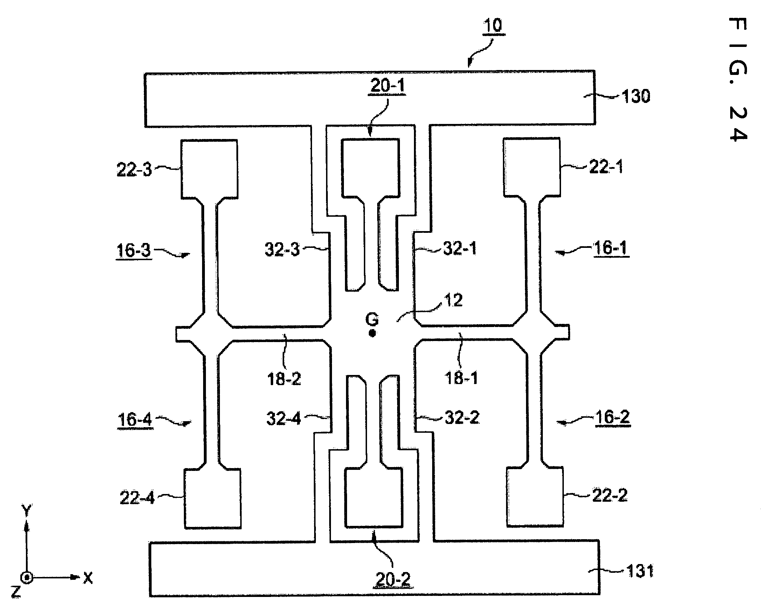

FIG. 24 is a plan view of a first modification of the vibrating element 10 according to the fifth embodiment. Since this modified vibrating element differs from the vibrating element (FIG. 23) according to the fifth embodiment described above only in shapes of the beams extending from the base section, only the different portions are described. According to FIG. 24, the beams 32-1, 32-2, 32-3, and 32-4 having elasticity extend from the four corners of the base section 12 in the Y axis direction. The beams 32-1, 32-2, 32-3, and 32-4 are substantially crank-shaped. The tips of the beams 32-1 and 32-3 extending in the same direction along the Y axis are connected to the frame section 130, and the tips of the other beams 30-2 and 30-4 in the opposite direction are connected to the frame section 131.

Note that also the vibrating element 10 according to the first modification is symmetric around the center point G of the base section 12 in both the X direction and the Y direction.

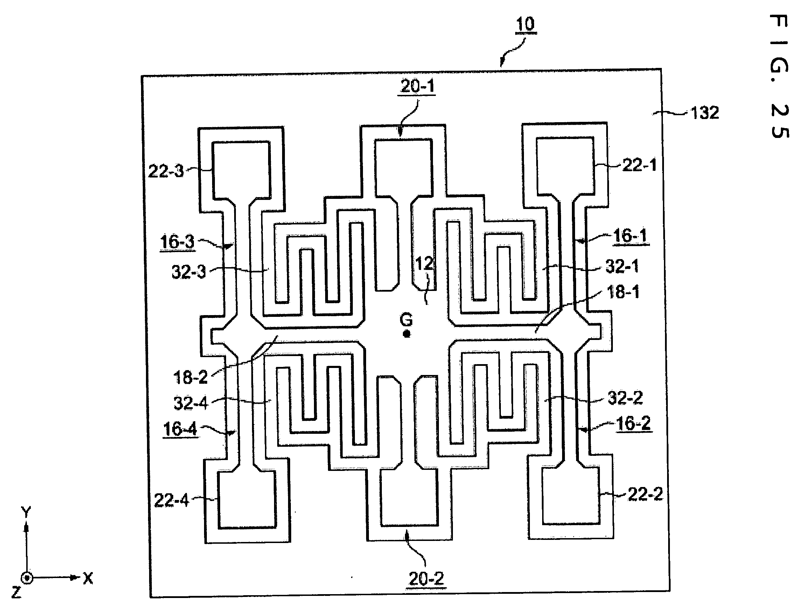

FIG. 25 is a plan view of a second modification of the vibrating element 10 according to the fifth embodiment. Since this modification differs from the vibrating element (FIG. 23) according to the fifth embodiment described above only in the shape of the frame, only the different portion is described.

The same reference numerals are respectively provided for the common sections. According to FIG. 25, a frame section 132 is formed of a single body surrounding excited vibration arms 16-1, 16-2, 16-3, 16-4 and the sensing vibration arms 20-1, 20-2, and the beams 32-1, 32-2, 32-3, and 32-4 extend from the four corners of the base section 12. The shapes of these beams are the same as the shapes of the beams shown in the fifth embodiment (shown in FIG. 23). The tip portions of the beams continue into the frame section 132.

The gaps between the frame section 132 and the excited vibration arms 16-1 through 16-4, the sensing vibration arms 20-1, 20-2, and the beams 32-1 through 32-4 are arranged to be substantially constant. In other words, the gaps between the adjacent sections of the vibrating element 10 inside the frame section 132 including the frame section 132 are arranged to be substantially the same. Note that, in the vibrating element 10 according to the fifth embodiment (FIG. 23) described above, the gaps between the sections can be arranged to be substantially constant, and also in the vibrating element 10 shown in FIG. 24, the frame sections 130 and 131 can be expanded so as to form substantially constant gaps with other sections.

Note that the vibrating element 10 according to the second modification is symmetric around the center point G of the base section 12 in both the X direction and the Y direction.

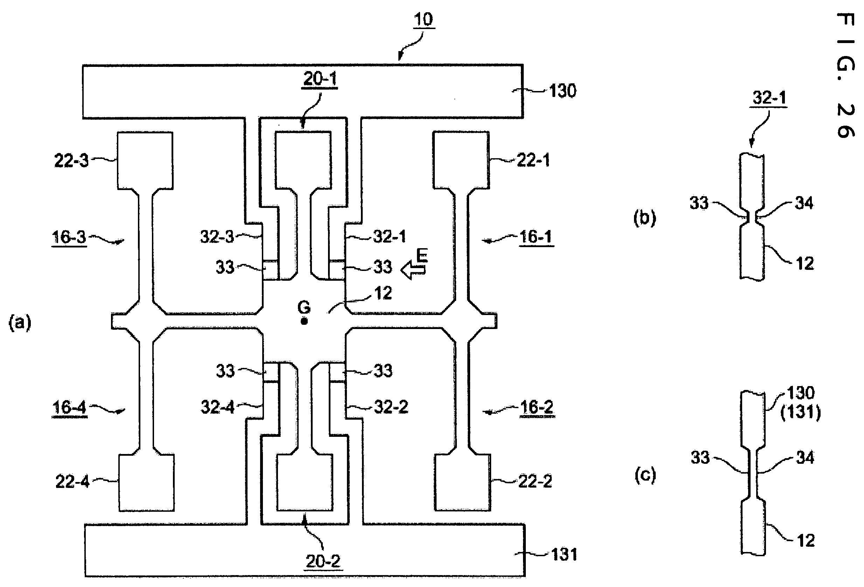

FIG. 26 is a plan view of a third modification of the vibrating element 10 according to the fifth embodiment. Since this modification differs from the vibrating element (FIGS. 23 through 25) according to the fifth embodiment described above only in a part of the cross-sectional shape of the beams, only the different portion is described. Note that, the third modification is described taking the plane shape of the piezoelectric vibrating element shown in FIG. 24 described above as an example. FIG. 26(a) is a plan view of the vibrating element according to the third modification of the fifth embodiment, and FIGS. 26(b) and 26(c) are partial cross-sectional views from the arrow E in FIG. 26(a).

According to FIGS. 26(a) and 26(b), the beams 32-1 through 32-4 extend from the four corners of the base section 12 shaped substantially rectangle and provided in the center portion of the vibrating element 10. In the connection sections of the beams 32-1 through 32-4 with the base section 12, there are provided hollow sections 33 and 34 on both of the principal surfaces of the vibrating element 10. The hollow sections 33 and 34 are formed from the edges of the base section 12 with the same width as the beams 32-1 through 32-4 and with the remaining thickness of a third of the beams to have lower stiffness.

According to FIG. 26(c), the hollow sections 33 and 34 are formed from the edges of the base section 12 to the connecting sections of the frame sections 130 or 131 with the beams. In other words, the beams 32-1 and 32-2 are formed thinner than the base section 12 or the frame section 130 or 131 to have smaller rigidity.

Note that, the hollow sections 33 and 34 can be applied to the piezoelectric vibrating elements shown in the first embodiment through the fourth embodiment.

Hereinafter, electrode patterns formed on the vibrating element 10 according to the fifth embodiment described above are described referring to the accompanying drawings.

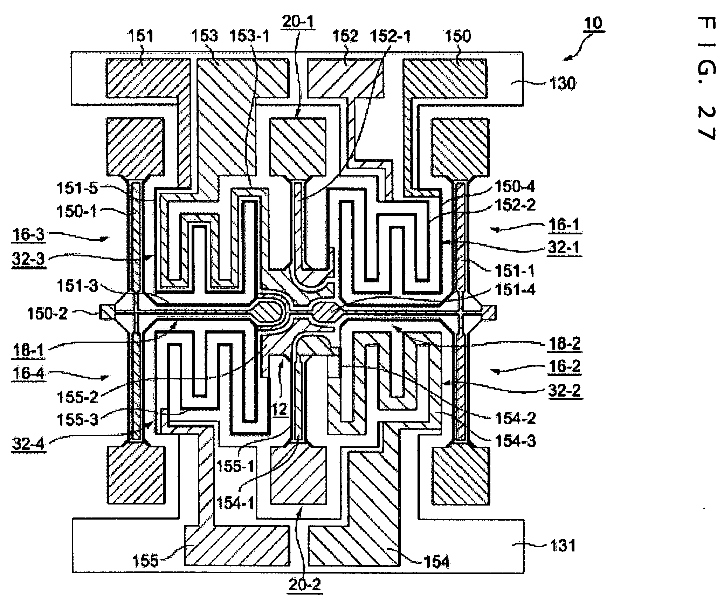

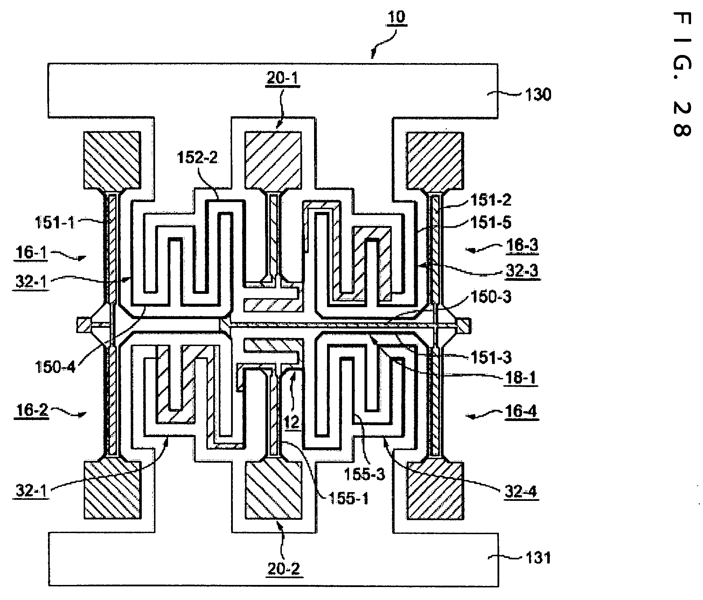

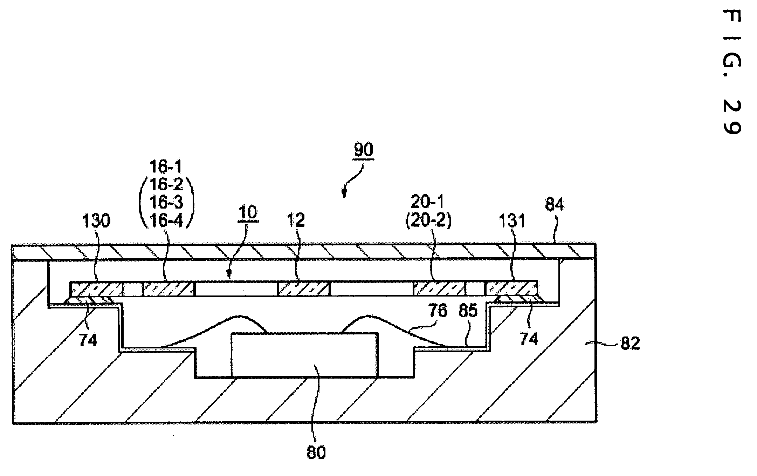

FIGS. 27 and 28 are plan views a structure of the electrode patterns of the vibrating element 10 according to the fifth embodiment. FIG. 27 shows one of the principal surfaces (hereinafter referred to as a front surface) facing a base member 82 (FIG. 29) described below, and FIG. 28 shows a plan view illustrating the electrode patterns formed on the other principal surface (hereinafter referred to as a reverse surface). Note that, characteristic portions of the fifth embodiment are mainly described, and other portions can be omitted. In FIGS. 27 and 28, enclosed portions with hatching indicate electrodes formed on the principal surfaces, portions with heavy solid lines indicate electrodes formed on the side surfaces. According to FIGS. 27 and 28, the vibrating element 10 is provided at least with exciting signal electrodes, exciting signal GND electrodes, first sensing signal electrodes, first sensing signal GND electrodes, second sensing signal electrodes, and second sensing signal GND electrodes.

The exciting signal electrode is composed of an electrode pattern 150-1 formed continuously on the front surface of the excited vibration arms 16-3 and 16-4, an electrode pattern 150-3 formed continuously on the reverse surface of the connecting arm 18-1 and the base section 12 and connected to an electrode pattern 150-2 formed continuously on the reverse surface of the excited vibration arms 16-1 and 16-2, and an electrode pattern 150-4 formed on the side surface of the beam 32-1, sequentially connected to a conduction electrode section 150 for the exciting signal formed on the frame section 130.

The exciting signal GND electrode is composed of an electrode pattern 151-1 formed on the front surface of the excited vibration arms 16-1 and 16-2, an electrode pattern 151-2 formed on the reverse surface of the excited vibration arms 16-3 and 16-4, an electrode pattern 151-3 formed on the side surface of the connecting arm 18-1, an electrode pattern 151-4 formed front surface of the base section 12, and an electrode pattern 151-5 formed on the side surface of the beam 32-3, sequentially connected to a conduction electrode section 151 for the exciting signal GND formed on the frame section 130.

Further, the first sensing signal electrode is composed of an electrode pattern 152-1 formed on the front surface of an arm section of the sensing vibration arm 20-1 and the base section 12 and an electrode pattern 152-2 formed on the side surface of the beam 32-1, sequentially connected to a conduction electrode section 152 of the first sensing signal electrode.

Further, the first sensing signal GND electrode is composed of an electrode pattern 153-1 formed on the front surface of the base section 12 and the beam 32-1 and continuously connected to a conduction electrode section 153 of the first sensing signal GND electrode.

Further, the second sensing signal electrode is composed of an electrode pattern 154-1 formed on the front surface of an arm section of the sensing vibration arm 20-2, an electrode pattern 154-2 formed on the side surface of the beam 32-2, and an electrode pattern 154-3 formed on the front surface of the beam 32-2, sequentially connected to a conduction electrode section 154 of the second sensing signal electrode formed on the front surface of the frame section 131.

Further, the second sensing signal GND electrode is composed of an electrode pattern 155-1 formed on the side surface of an arm section of the sensing vibration arm 20-2, an electrode pattern 155-2 formed on the front surface of the base section 12, and an electrode pattern 155-3 formed on the side surface of the beam 32-4, sequentially connected to a conduction electrode section 155 of the second sensing signal GND electrode formed on the front surface of the frame section 131.

The vibrating element 10 having the shape and the electrode pattern structure as described above is encapsulated in the container.

Hereinafter, a supporting structure of the vibrating element 10 according to the present embodiment 5 and a structure of the gyroscope 90 using the vibrating element 10 are described referring to the accompanying drawings.

FIG. 29 is a schematic cross-sectional view of the gyroscope 90 according to the present embodiment 5. According to FIG. 29, the gyroscope 90 is composed of the vibrating element 10 and the semiconductor device 80, both encapsulated in the container formed of the base member 82 and lid member 84. The container formed of the base member 82 and the lid member 84 provides hermetic sealing to maintain inside thereof vacuum.

The base member 82 is formed of laminated ceramics, and is provided with necessary electrode wiring. A metal film is formed on the upper surface of the periphery of the base member 82, and the lid member 84 made of metal is welded on the periphery of the upper surface of the base member 82.

The semiconductor device 80 comprises a drive circuit for exciting the vibrating element 10 to vibrate and a detection circuit for detecting the sensing vibration generated at the vibrating element 10 when an angular velocity is externally applied to the vibrating element 10 to output an electric signal in accordance the angular velocity.

The semiconductor device 80 is fixed to a surface of the lowest step of the base member 82 and is connected to the electrode wiring 85 formed on the base member 82 via gold wires 76. The electrode wiring is provided at least corresponding to the conduction electrode sections 150 through 155 provided on the vibrating element 10. The vibrating element 10 is fixedly adhered to the medium step of the base member 82 at the conduction electrodes 150 through 155 by a conductive adhesive 74. The conductive adhesive 74 has a thickness enough to prevent the piezoelectric vibrating element form contacting to the base member 82, and the excited vibration arms 16-1 through 16-4, the base section 12, and the sensing vibration arms 20-1, 20-2 are kept floating from the base member.

According to the above structure, the conduction electrode section 150 of the excited vibration electrode formed on the frame section 130 of the vibrating element 10 described above, the conduction electrode section 151 of the exciting signal GND electrode, the conduction electrode section 152 of the first sensing signal electrode, the conduction electrode section 153 of the first sensing signal GND electrode, the conduction electrode section 154 of the second sensing signal electrode formed on the frame section 131, and the conduction electrode section 155 of the second sensing signal GND electrode are electrically connected to the semiconductor device 80 via electrical wiring of the base member 82 and the gold wires 76. Thus, the vibrating element 10 is excited to vibrate by the drive circuit of the semiconductor device 80 and outputs the signal of the sensing vibration corresponding to the angular velocity to the detection circuit of the semiconductor device 80. The semiconductor device 80 then outputs the electrical signal corresponding to the angular velocity.

Note that, in the second modification of the vibrating element shown in FIG. 25 and described above, the frame section 132 can be fixed to the medium step of the base member 82.

Further, since the operation of the vibrating element 10 is the same as that of the first embodiment (shown in FIGS. 8 through 11, 16, and 17), further description is omitted.

Therefore, according to the fifth embodiment described above, since the supporting sections 30-1, 30-3 and the frame section 130 described above are integrally formed, and the supporting sections 30-2, 30-4 and the frame section 131 are also integrally formed, the structural strength of the supporting sections is increased to maintain a more stable posture. Further, since the frame sections and the supporting sections are integrated, the piezoelectric vibrating element is easy to be handled when encapsulated in the container, as described below, to advantageously improve the operating efficiency.

Further, since the frame sections 130, 131 or the frame section 132 are arranged to have substantially constant gaps with the base section 12, the excited vibration arms 16-1 through 16-4, the sensing vibration arms 20-1, 20-2, and the beams 32-1 through 32-4 to provide constant circumferential gaps of the vibrating element 10 with the surrounding frame sections 130, 131 or the frame section 132, the resist film can be formed in a constant thickness in the resist deposition process of the photolithographic process for shaping the vibrating element 10 by etching. Thus, the shape of each section of the piezoelectric vibrating element can stably be formed, and, as a result, the excited vibrations and the sensing vibrations can be more stable.

Since the hollow sections 33, 34 shaped so as to have smaller stiffness are provided on part of the beams, vibrations or impacts caused by environmental conditions do hardly propagate from the supporting sections to the base section 12 via the beams, and on the contrary, the vibrations of the base section 12 do hardly propagate to the frame sections, to advantageously reduce negative effects on the excited vibrations or the sensing vibrations.

As described above, equivalent portions of the supporting sections 30-1 through 30-4 shown in the first embodiment and the frame sections 130, 131 or the frame section 132 are formed integrally. Accordingly, since the exciting signal electrodes and sensing signal electrodes are connected to the conduction electrode sections provided on the frame sections, the electrode forming process can be simplified, and also the operational efficiency in encapsulating the vibrating element 10 in the container described below can be improved.

Since the frame sections 130, 131, and 132 including the supporting sections are fixed to and supported by the base member 82, the piezoelectric vibrating element can be supported more stably. Further, since the vibrating element 10 can be directly fixed to the base member 82 without the substrate 60 as a supporting stage shown in the first embodiment, the structure can be simplified to reduce the cost and the size.

### Sixth embodiment

Hereinafter, a piezoelectric vibrating gyroscope according to the sixth embodiment of the present invention is described referring to the accompanying drawings. In the present embodiment 6, the fixing structure of the vibrating element 10 is different from that of the gyroscope 90 (FIGS. 12 and 29) described in the first embodiment above or the fifth embodiment, and the different portions are described.

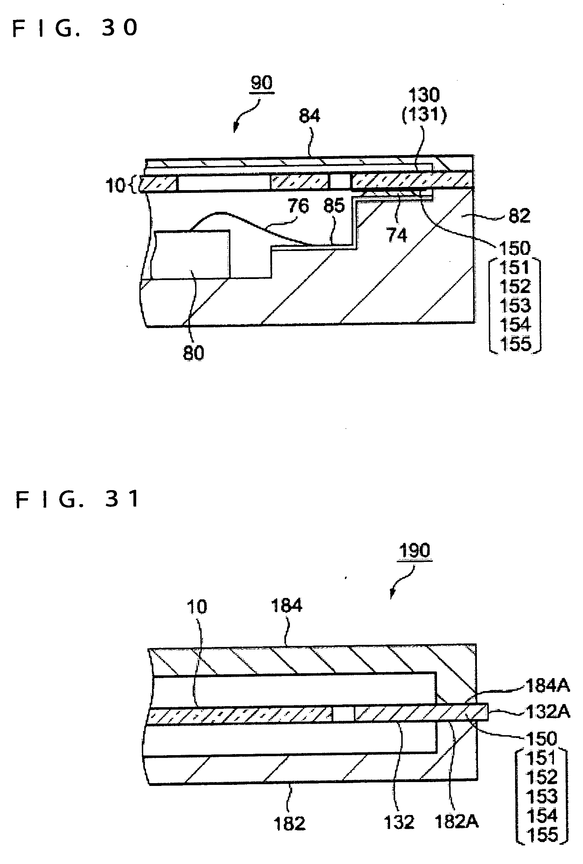

FIG. 30 is a partial cross-sectional view of the gyroscope 90 according to the present embodiment 6. According to FIG. 30, the gyroscope 90 is composed of the vibrating element 10 and the semiconductor device 80, both encapsulated in the container formed of the base member 82 and lid member 84. The container provides hermetic sealing to maintain a vacuum in its inside.

The base member 82 is formed of laminated ceramics and is provided with necessary electrode wiring. A metal film is formed on the upper surface of the periphery of the base member 82, the vibrating element 10 provided with a metal film for fixing on both surface of the frame 132 in the portion where no conduction electrodes are formed is stacked thereon, the lid member 84 is further stacked thereon, and then the base member 82, the vibrating element 10, and the lid member 84 are fixed in a stacked form by welding or adhesive bonding. The lid member is made of metal, and is provided with a hollow section not to contact the vibrating element except the fixing section on the periphery thereof.

The semiconductor device 80 comprises a drive circuit for exciting the vibrating element 10 to vibrate and a detection circuit for detecting the sensing vibration generated at the vibrating element 10 when an angular velocity is externally applied to the vibrating element 10 to output an electric signal in accordance the angular velocity.

The semiconductor device 80 is fixed to a surface of the lowest step of the base member 82 and is connected to the electrode wiring 85 formed on the base member 82 via gold wires 76. The electrode wiring is provided at least corresponding to the conduction electrode sections 150 through 155 provided on the vibrating element 10. The vibrating element 10 is fixedly adhered to the medium step of the base member 82 at the conduction electrodes 150 through 155 by a conductive adhesive 74. The conductive adhesive 74 has a thickness sufficient to prevent the vibrating element form contacting the base member 82, and the excited vibration arms 16-1 through 16-4, the base section 12, and the sensing vibration arms 20-1, 20-2 are kept floating from the base member.

According to the sixth embodiment described above, since the piezoelectric vibrating element is pinched to be more firmly fixed by the periphery of the base member 82 and the lid member 84, so called vibration leakage, namely that the vibrations of the excited vibration arms 16-1 through 16-4 or the sensing vibration arms 20-1, 20-2 leak to the base member 82 or the lid member 84, can be reduced to provide more stable excited vibrations or sensing vibrations.

Further, since the height level of the vibrating element 10 in the cross-sectional view is defined by the step of the base member 82, the gap between the piezoelectric element 10 and the base member 82 can suitably be arranged to prevent abutting on each other.

### Seventh embodiment

Subsequently, a seventh embodiment of the present invention is described referring to the accompanying drawings showing a partial cross-sectional view of the structure of the essential part of a piezoelectric vibrator 190 based on the technical idea of the sixth embodiment. According to FIG. 31, the piezoelectric vibrator 190 is composed of a base member 182, the vibrating element 10, and a lid member 184. The base member 182 is shaped like a container (or cup) having a protruded peripheral section 182A and is made of ceramics. The lid member 184 is also shaped like a container (or cup) having a protruded peripheral section 184A, which has substantially the same shape as the base member 182. The vibrating element 10 surrounded by the frame section 132 shown in FIG. 25 and described in the fifth embodiment is adopted. The conduction electrode sections 150 through 155 (FIG. 27) formed on the frame section 132 of the vibrating element 10 as described above are also formed on the edge surface 132A protruded from the edge portion of the base member 182.

In the vibrating element 10, although not shown in the drawings, cut-in sections are formed from the periphery of the frame section 132 to the inside of the peripheral sections 182A and 184A of the base member 182 and the lid member 184, and the conduction electrode sections 150 through 155 are formed on the side surfaces of the cut-in sections and continue to the edge surface 132A. Therefore, no electrodes exist in an area of the frame section 132 where the peripheral sections 182A and 184A of the base member 182 and the lid member 184 contact each other, and both surfaces of the area are kept flat. Further, a metal layer of a constant thickness is formed in the area of the frame section 132 where the peripheral sections 182A and 184A of the base member 182 and the lid member 184 contact each other.

The base member 182, the vibrating element 10, and the lid member 184 thus formed are stacked and fixed in a appressed condition by welding or adhesive bonding with a vacuum kept inside.

The piezoelectric vibrator 190 thus structured is mounted on a circuit board (not shown in the drawings) of a piezoelectric vibrating gyroscope. By connecting the conduction electrodes 150 through 155 formed on the edge surface 132A of the vibrating element 10 to an external drive circuit and an external detection circuit, the gyroscope can be composed.

Since the vibrator described in the seventh embodiment is composed of the vibrating element 10 stacked with the base member 182 and the lid member 184, a thinner vibrator can be provided. Further, since the conduction electrode sections 150 through 155 are formed on the edge surface of the vibrating element 10, the external drive circuit and the external detection circuit described above can be connected easily and with a reduced space.

In the piezoelectric vibrating element of each of the above embodiments, the number of the beams is four and the number of the first supporting sections is four, but different numbers can be applied. Taking the amplitude or directions of the base section of the vibrating element into consideration, the width, the length, the thickness, the number, and/or the shape of the first beams can be arranged to provide appropriate elasticity.

The width, the thickness, the length, the number, the extending directions of the beams described in the above embodiments can be properly arranged or selected in accordance with the amplitude or the direction of the vibration of the base section of the piezoelectric vibrating element.

Although with the vibrating element 10 of the first embodiment shown in FIGS. 2 and 3, conduction electrodes 50, 56 are formed on each supporting section and the conduction electrodes 50, 56 are connected to the exciting electrode 52 or the sensing electrode 54 formed on the respective vibration arms via connecting electrodes 58-1 through 58-5, the conduction electrodes 50-1 through 50-4, 56 can be omitted. In this case, the base section can be provided with conduction electrodes for connection to the exciting electrodes 52-1 through 52-4 or the sensing electrodes 54-1 through 54-4, and electrical connection can be provided by gold wires or the like.

Although in the supporting structure for the vibrating element of the first embodiment, the vibrating element 10 is fixed to the substrate 60 with the conductive adhesive 70, the vibrating element according to the present invention can adopt different supporting structure. For example, the first supporting sections 30-1 through 30-4 and the second supporting section 40 can be supported by properly shaped metal lead wires. For supporting sections that need provide electrical connection, non-conductive adhesive can be used as well.

Although conductive adhesive is used in the supporting structure for the vibrating element according to the above embodiments, other materials can be used. For example, the thermo compression bonding with gold balls is applicable. Since the gold balls are used for electrical connections and fixing at the same time and have elasticity, the same effects as with the elastic conductive adhesive can be obtained. Further, combinations are possible, such that the first supporting sections 30-1 through 30-4 are fixed by the gold balls and the second supporting section 40 or 140 is fixed with a conductive adhesive having a low elastic module.

Although in the above embodiments, vibrating elements having a pair of excited vibration systems extending from the periphery of the base section in opposing directions, and a pair of sensing vibration arms extending in directions perpendicular to the directions in which the excited vibration systems extends are described, the present invention is not limited to the piezoelectric vibrating element thus structured. For example, the present invention is applicable to a tuning fork piezoelectric vibrating element, or a H-shaped piezoelectric vibrating element having a pair of excited vibration arms extending from the base section in one direction and a pair of sensing vibration arms extending from the base section in the other direction.

Further, although in the above embodiments, the vibrating element and the piezoelectric vibrator for a piezoelectric vibrating gyroscope are described, the present invention can also be applied to a piezoelectric vibrating element and a piezoelectric vibrator without the function of detecting angular velocity. For example, the present invention can be applied to a piezoelectric vibrating element and a piezoelectric vibrator for a reference clock generator or an acceleration sensor.

## Claims

1. A piezoelectric vibrating element comprising:
- a base section (12);
- a plurality of vibration arms (16-1 - 16-4, 20-1, 20-2), namely exciting vibration arms (16-1 - 16-4) and sensing vibration arms (20-1, 20-2), extending from the base section (12) in a single plane;
- a plurality of first beams (32-1 - 32-4) having elasticity and extending from the base section (12) and between the vibration arms (16-1 - 16-4, 20-1, 20-2); and
- first supporting sections (30-1 - 30-4) formed at a tip portion of the first beams (32-1 - 32-4),
**characterized in that** each first beam (32-1 - 32-4) comprises a first beam section (32-1A, 32-2A, 32-3A, 32-4A) that extends along a first direction in the single plane and a second beam section (32-1 B, 32-2B, 32-3B, 32-4B) that extends perpendicular to the first direction in the single plane for allowing a rotational vibration of the base section (12) around an axis perpendicular to the single plane.

2. The element according to claim 1, further comprising a second supporting section (40) provided at the center of the base section (12).

3. The element according to any one of claims 1 and 2, wherein:
- a pair of openings (100) are symmetrically provided with respect to the center of the base section (112);
- a second beam (102-1, 102-2) having elasticity is formed between the openings (100); and
- a second supporting section (40) is provided at the center of the second beam.

4. The element according to claim 2, wherein:
- an exciting electrode (52-1, 52-2) for exciting the piezoelectric vibrating element to vibrate is formed on a surface of each exciting vibration arm (16-1 - 16-4); and
- conduction electrodes (50-1 - 50-4, 56) are formed on a surface of the first supporting sections (30-1 - 30-4) and a surface of the second supporting section (40),
wherein the exciting electrodes (52-1, 52-2) are connected to the conduction electrodes (50-1 - 50-4, 56).

5. The element according to claim 4, further comprising:
sensing electrodes (54-1 - 54-3) for detecting a sensing vibration generated in the piezoelectric vibrating element in accordance with an excited vibration and an angular velocity applied from the outside, the sensing electrodes being formed at a position different from that of the exciting electrodes (52-1, 52-2) wherein the sensing electrodes and the exciting electrodes (52-1, 52-2) are connected to different ones of the conduction electrodes (50-1 - 50-4, 56).

6. The element according to claim 1, wherein the first supporting sections (30-1 - 30-4) are formed continuous to a frame section (130, 131) sandwiching the vibration arms (16-1 - 16-4, 20-1, 20-2).

7. The element according to claim 1, wherein a frame section (130, 131) is formed so as to provide constant gaps with the base section (12), the vibration arms (16-1 - 16-4, 20-1, 20-2), and the beams (32-1 - 32-4).

8. The element according to claim 6, wherein a part of each first beam (32-1 - 32-4) is shaped to have smaller stiffness than the rest.

9. The element according to claim 6, wherein the exciting electrodes (150-1 - 150-3) and the sensing electrode (152-1, 152-2) formed on the vibration arms (16-1 - 16-4, 20-1, 20-2) are connected to the conduction electrodes (150, 152) formed on the frame section (130).

10. A system comprising a supporting structure and a piezoelectric vibrating element, the system comprising:
- the piezoelectric vibrating element (10) according to claim 2;
- a supporting stage (60) for oppositely mounting the piezoelectric vibrating element; and
- fixing means (70) provided between the first supporting sections (30-1 - 30-4) and the supporting stage (60) and between the second supporting section (40) and the supporting stage (60) for fixing the piezoelectric vibrating element.

11. The system according to claim 10, wherein the fixing means (70) is a conductive material.

12. The system according to claim 11, wherein the fixing means (70) is an elastic material.

13. The system according to claim 10, wherein the fixing means (70) provided between the second supporting section (40) and the supporting stage (60) is thicker than the fixing means (70) provided between the first supporting section (30-1 - 30-4) and the supporting stage (60).

14. A system comprising a supporting structure and a piezoelectric vibrating element, the system comprising:
- the piezoelectric vibrating element (10) according to claim 6; and
- a base member (82) to which the piezoelectric vibrating element (10) is fixed,
wherein the frame section (130, 131) formed on the piezoelectric vibrating element is fixed to the base member (82).

15. The system according to claim 14, wherein a peripheral portion of the frame section (132) of the piezoelectric vibrating element (10) is fixed to a peripheral portion (182A) of the base member (182).

16. A piezoelectric vibrator comprising:
- the piezoelectric vibrating element (10) according to any one of claims 1 to 9;
a base member (82) to which the piezoelectric vibrating element (10) is fixed; and
- a lid member (84) for housing and hermetically sealing the piezoelectric vibrating element in cooperation with the base member.

17. A piezoelectric vibrating gyroscope, comprising:
- the piezoelectric vibrating element (10) according to any one of claims 1 to 9;
- a drive circuit for exciting the piezoelectric vibrating element to vibrate; and
- a detection circuit for detecting a sensing vibration generated in the piezoelectric vibrating element in response to application of an angular velocity from the outside to the piezoelectric vibrating element.

## Patentansprüche

1. Piezoelektrisches Schwingelement, das umfasst:
- einen Basisabschnitt (12):
- eine Vielzahl von Schwingarmen (16-1 bis 16-4, 20-1, 20-2), d. h. anregende Schwingarme (16-1 bis 16-4) und messende Schwingarme (20-1, 20-2), die sich vom Basisabschnitt (12) in einer einzelnen Ebene erstrecken;
- eine Vielzahl von ersten Balken (32-1 bis 32-4), die elastisch sind und sich vom Basisabschnitt (12) und zwischen den Schwingarmen (16-1 bis 16-4, 20-1, 20-2) erstrecken; und
- erste Trägerabschnitte (30-1 bis 30-4), die an einem Spitzenabschnitt der ersten Balken (32-1 bis 32-4) gebildet sind,
**dadurch gekennzeichnet, dass** jeder erste Balken (32-1 bis 32-4) einen ersten Balkenabschnitt (32-1A, 32-2A, 32-3A, 32-4A) umfasst, der sich entlang einer ersten Richtung in der einzelnen Ebene erstreckt, und einen zweiten Balkenabschnitt (32-1B, 32-2B, 32-3B, 32-4B) umfasst, der sich senkrecht zur ersten Richtung in der einzelnen Ebene erstreckt, um eine Drehschwingung des Basisabschnitts (12) um eine Achse senkrecht zur einzelnen Ebene zu ermöglichen.

2. Element nach Anspruch 1, das des Weiteren einen zweiten Trägerabschnitt (40) umfasst, der in der Mitte des Basisabschnitts (12) bereitgestellt ist.

3. Element nach einem der Ansprüche 1 und 2, wobei:
- ein Paar von Öffnungen (100) in Bezug auf die Mitte des Basisabschnitts (112) symmetrisch bereitgestellt ist;
- ein zweiter Balken (102-1, 102-2), der elastisch ist, zwischen den Öffnungen (100) gebildet ist; und
- ein zweiter Trägerabschnitt (40) in der Mitte des zweiten Trägers bereitgestellt ist.

4. Element nach Anspruch 2, wobei:
- eine anregende Elektrode (52-1, 52-2) zum Anregen des piezoelektrischen Schwingelements zum Schwingen auf einer Oberfläche jedes anregenden Schwingarms (16-1 bis 16-4) gebildet ist; und
- Leitungselektroden (50-1 bis 50-4, 56) auf einer Oberfläche der ersten Trägerabschnitte (30-1 bis 30-4) und einer Oberfläche des zweiten Trägerabschnitts (40) gebildet sind,
wobei die anregenden Elektroden (52-1, 52-2) mit den Leitungselektroden (50-1 bis 50-4, 56) verbunden sind.

5. Element nach Anspruch 4, das des Weiteren umfasst:
Messelektroden (54-1 bis 54-3) zum Erfassen einer messenden Schwingung, die im piezoelektrischen Schwingelement erzeugt wird, und zwar gemäß einer angeregten Schwingung und einer Winkelgeschwindigkeit, die von außen angelegt wird, wobei die Messelektroden an einer Position gebildet sind, die sich von jener der anregenden Elektroden (52-1, 52-2) unterscheidet, wobei die Messelektroden und die anregenden Elektroden (52-1, 52-2) mit unterschiedlichen der Leitungselektroden (50-1 bis 50-4, 56) verbunden sind.

6. Element nach Anspruch 1, wobei die ersten Trägerabschnitte (30-1 bis 30-4) durchgehend auf einem Rahmenabschnitt (130, 131) gebildet sind, der die Schwingarme (16-1 bis 16-4, 20-1, 20-2) sandwichartig umgibt.

7. Element nach Anspruch 1, wobei ein Rahmenabschnitt (130, 131) so gebildet ist, dass er konstante Lücken mit dem Basisabschnitt (12), den Schwingarmen (16-1 bis 16-4, 20-1, 20-2) und den Balken (32-1 bis 32-4) bereitstellt.

8. Element nach Anspruch 6, wobei ein Teil des ersten Balkens (32-1 bis 32-4) so ausgebildet ist, dass er weniger steif als der Rest ist.

9. Element nach Anspruch 6, wobei die anregenden Elektroden (150-1 bis 150-3) und die Messelektroden (152-1, 152-2), die auf den Schwingarmen (16-1 bis 16-4, 20-1, 20-2) gebildet sind, mit den Leitungselektroden (150, 152) verbunden sind, die auf dem Rahmenabschnitt (130) gebildet sind.

10. System, das eine Trägerstruktur und ein piezoelektrisches Schwingelement umfasst, wobei das System umfasst:
- das piezoelektrische Schwingelement (10) nach Anspruch 2;
- ein Trägergestell (60), um das piezoelektrische Schwingelement gegenüber anzubringen; und
- ein Befestigungsmittel (70), das zwischen den ersten Trägerabschnitten (30-1 bis 30-4) und dem Trägergestell (60) und zwischen dem zweiten Trägerabschnitt (40) und dem Trägergestell (60) bereitgestellt ist, um das piezoelektrische Schwingelement zu befestigen.

11. System nach Anspruch 10, wobei das Befestigungsmittel (70) ein leitfähiges Material ist.

12. System nach Anspruch 11, wobei das Befestigungsmittel (70) ein elastisches Material ist.

13. System nach Anspruch 10, wobei das Befestigungsmittel (70), das zwischen dem zweiten Trägerabschnitt (40) und dem Trägergestell (60) bereitgestellt ist, dicker als das Befestigungsmittel (70) ist, das zwischen dem ersten Trägerabschnitt (30-1 bis 30-4) und dem Trägergestell (60) bereitgestellt ist.

14. System, das eine Trägerstruktur und ein piezoelektrisches Schwingelement umfasst, wobei das System umfasst:
- das piezoelektrische Schwingelement (10) nach Anspruch 6; und
- ein Basiselement (82), an dem das piezoelektrische Schwingelement (10) befestigt ist,
wobei der Rahmenabschnitt (130, 131), der auf dem piezoelektrischen Schwingelement gebildet ist, am Basiselement (82) befestigt ist.

15. System nach Anspruch 14, wobei ein Umfangsabschnitt des Rahmenabschnitts (132) des piezoelektrischen Schwingelements (10) an einem Umfangsabschnitt (182A) des Basiselements (182) befestigt ist.

16. Piezoelektrischer Schwinger, der umfasst:
- das piezoelektrische Schwingelement (10) nach einem der Ansprüche 1 bis 9;
ein Basiselement (82), an dem das piezoelektrische Schwingelement (10) befestigt ist; und
- ein Deckelelement (84) zum Aufnehmen und hermetischen Versiegeln des piezoelektrischen Schwingelements in Zusammenwirkung mit dem Basiselement.

17. Piezoelektrischer Schwingkreisel, der umfasst:
- das piezoelektrische Schwingelement (10) nach einem der Ansprüche 1 bis 9;
- einen Antriebsschaltkreis zum Anregen des piezoelektrischen Schwingelements zum Schwingen; und
- einen Erfassungsschaltkreis zum Erfassen einer messenden Schwingung, die im piezoelektrischen Schwingelement erzeugt wird, und zwar in Reaktion auf das Anlegen einer Winkelgeschwindigkeit auf das piezoelektrische Schwingelement von außen.

## Revendications

1. Elément vibrant piézoélectrique comprenant :
- une section de base (12) ;
- une pluralité de branches de vibration (16-1 - 16-4, 20-1, 20-2), à savoir des branches de vibration d'excitation (16-1 - 16-4) et des branches de vibration de détection (20-1, 20-2), s'étendant depuis la section de base (12) dans un plan unique ;
- une pluralité de premières poutres (32-1 - 32-4) ayant une élasticité et s'étendant depuis la section de base (12) et entre les branches de vibration (16-1 - 16-4, 20-1, 20-2) ; et
- des premières sections de support (30-1 - 30-4) formées au niveau d'une partie d'extrémité des premières poutres (32-1 - 32-4),
**caractérisé par le fait que** chaque première poutre (32-1 - 32-4) comprend une première section de poutre (32-1A, 32-2A, 32-3A, 32-4A) qui s'étend le long d'une première direction dans le plan unique et une seconde section de poutre (32-1B, 32-2B, 32-3B, 32-4B) qui s'étend perpendiculaire à la première direction dans le plan unique pour permettre une vibration rotationnelle de la section de base (12) autour d'un axe perpendiculaire au plan unique.

2. Elément selon la revendication 1, comprenant en outre une seconde section de support (40) disposée au centre de la section de base (12).

3. Elément selon l'une quelconque des revendications 1 et 2, dans lequel :
- une paire d'ouvertures (100) sont disposées symétriquement par rapport au centre de la section de base (112) ;
- une seconde poutre (102-1, 102-2) ayant une élasticité est formée entre les ouvertures (100) ; et
- une seconde section de support (40) est disposée au centre de la seconde poutre.

4. Elément selon la revendication 2, dans lequel :
- une électrode d'excitation (52-1, 52-2) pour exciter l'élément vibrant piézoélectrique afin qu'il vibre est formée sur une surface de chaque branche de vibration d'excitation (16-1 - 16-4) ; et
- des électrodes de conduction (50-1 - 50-4, 56) sont formées sur une surface des premières sections de support (30-1 - 30-4) et une surface de la seconde section de support (40),
dans lequel les électrodes d'excitation (52-1, 52-2) sont connectées aux électrodes de conduction (50-1 - 50-4, 56).

5. Elément selon la revendication 4, comprenant en outre :
des électrodes de détection (54-1 - 54-3) pour détecter une vibration de détection générée dans l'élément vibrant piézoélectrique selon une vibration excitée et une vitesse angulaire appliquée depuis l'extérieur, les électrodes de détection étant formées à un emplacement différent de celui des électrodes d'excitation (52-1, 52-2), les électrodes de détection et les électrodes d'excitation (52-1, 52-2) étant connectées à des électrodes de conduction différentes parmi les électrodes de conduction (50-1 - 50-4, 56).

6. Elément selon la revendication 1, dans lequel les premières sections de support (30-1 - 30-4) sont formées continues à une section de cadre (130, 131) prenant en sandwich les branches de vibration (16-1 - 16-4, 20-1, 20-2).

7. Elément selon la revendication 1, dans lequel une section de cadre (130, 131) est formée afin de fournir des espaces constants avec la section de base (12), les branches de vibration (16-1 - 16-4, 20-1, 20-2) et les poutres (32-1 - 32-4).

8. Elément selon la revendication 6, dans lequel une partie de chaque première poutre (32-1 -32-4) est mise en forme pour avoir une rigidité plus petite que le reste.

9. Elément selon la revendication 6, dans lequel les électrodes d'excitation (150-1 - 150-3) et l'électrode de détection (152-1, 152-2) formées sur les branches de vibration (16-1 - 16-4, 20-1, 20-2) sont connectées aux électrodes de conduction (150, 152) formées sur la section de cadre (130).

10. Système comprenant une structure de support et un élément vibrant piézoélectrique, le système comprenant :
- l'élément vibrant piézoélectrique (10) selon la revendication 2 ;
- un étage de support (60) pour monter de manière inversée l'élément vibrant piézoélectrique ; et
- un moyen de fixation (70) disposé entre les premières sections de support (30-1 - 30-4) et l'étage de support (60) et entre la seconde section de support (40) et l'étage de support (60) pour fixer l'élément vibrant piézoélectrique

11. Système selon la revendication 10, dans lequel le moyen de fixation (70) est un matériau conducteur.

12. Système selon la revendication 11, dans lequel le moyen de fixation (70) est un matériau élastique.

13. Système selon la revendication 10, dans lequel le moyen de fixation (70) disposé entre la seconde section de support (40) et l'étage de support (60) est plus épais que le moyen de fixation (70) disposé entre la première section de support (30-1 - 30-4) et l'étage de support (60).

14. Système comprenant une structure de support et un élément vibrant piézoélectrique, le système comprenant :
- l'élément vibrant piézoélectrique (10) selon la revendication 6 ; et
- un élément de base (82) auquel l'élément vibrant piézoélectrique (10) est fixé,
dans lequel la section de cadre (130, 131) formée sur l'élément vibrant piézoélectrique est fixée à l'élément de base (82).

15. Système selon la revendication 14, dans lequel une partie périphérique de la section de cadre (132) de l'élément vibrant piézoélectrique (10) est fixée à une partie périphérique (182A) de l'élément de base (182).

16. Vibreur piézoélectrique comprenant :
- l'élément vibrant piézoélectrique (10) selon l'une quelconque des revendications 1 à 9 ;
- un élément de base (82) auquel l'élément vibrant piézoélectrique (10) est fixé ; et
- un élément de couvercle (84) pour recevoir et sceller de manière hermétique l'élément vibrant piézoélectrique en coopération avec l'élément de base.

17. Gyroscope vibrant piézoélectrique, comprenant :
- l'élément vibrant piézoélectrique (10) selon l'une quelconque des revendications 1 à 9 ;
- un circuit de pilotage pour exciter l'élément vibrant piézoélectrique afin qu'il vibre ; et
- un circuit de détection pour détecter une vibration de détection générée dans l'élément vibrant piézoélectrique en réponse à l'application d'une vitesse angulaire depuis l'extérieur sur l'élément vibrant piézoélectrique.
